# EUROPÄISCHE PATENTSCHRIFT

(11) **EP 3 642 174 B1**
(45) Veröffentlichungstag und Bekanntmachung des Hinweises auf die Patenterteilung: **14.02.2024**
(21) Anmeldenummer: 18745557.1
(22) Anmeldetag: 20.07.2018
(51) Int. Cl.: C05F 17/914, C05F 17/936, C05F 17/921, C05F 17/964

(54) **TRANSPORTABLER KOMPOSTIERUNGS-CONTAINER, MODULARE KOMPOSTIERUNGS-ANLAGE UND KOMPOSTIERUNGSVERFAHREN**
TRANSPORTABLE COMPOSTING CONTAINER, MODULAR COMPOSTING FACILITY AND COMPOSTING METHOD
CONTENEUR DE COMPOSTAGE TRANSPORTABLE, INSTALLATION DE COMPOSTAGE MODULAIRE ET PROCÉDÉ DE COMPOSTAGE

(30) Priorität: 21.07.2017 DE 202017104385 U
(43) Veröffentlichungstag der Anmeldung: 29.04.2020
(73) Patentinhaber: Big Dutchman International GmbH, 49377 Vechta (DE)
(72) Erfinder: KROEGER, Lukas, 49439 Steinfeld-Mühlen (DE); THEMANN, Ludger, 49377 Vechta (DE)
(74) Vertreter: Eisenführ Speiser
(86) Internationale Anmeldenummer: PCT/EP2018/069794
(87) Internationale Veröffentlichungsnummer: WO 2019/016379

(56) Entgegenhaltungen:
- EP-A1- 0 621 248
- WO-A2-02/060837
- DE-A1- 19 710 027
- DE-A1- 19 833 624
- DE-T2- 69 434 054
- DE-U1- 8 806 535

## Beschreibung

Die Erfindung eine modulare Kompostierungs-Anlage und ein Kompostierungsverfahren.

Kompostierungs-Anlagen dienen dazu, organisches Material, wie beispielsweise Tierkot, insbesondere Geflügeltierkot, abzubauen und umzuwandeln und ein hygienisches, humusartiges Endprodukt zu erhalten. Es existieren verschiedene Lösungen für Kompostierungs-Anlagen. Beispielsweise beschreibt die WO 94/21577 A1 eine Kompostierungseinrichtung mit einer bewegbaren Wendeeinrichtung, in der in tunnelförmigen Kompostkanälen Kompostmaterial von Zeit zu Zeit umgesetzt wird. Die Erstellung einer großen Halle mit einer Vielzahl von Rottekanälen, die etwa 2 bis 5 m breit und 30 bis 150 m lang sind, ist jedoch aufwändig und erfordert eine hohe Investition. Auch der Betrieb ist aufwändig, beispielsweise durch das Versetzen der Wendeeinrichtung zwischen den Rottekanälen. Ein mobiles, modulares Mehrkammer-Kompostsystem ist beispielsweise aus der US 7,550,292 B2 bekannt. In der Praxis haben sich jedoch insbesondere die Qualität und die Kosten des Kompostierungsprozesses als verbesserungswürdig erwiesen.

Aus DE 694 34 054 T2 ist eine Kompostieranlage für die Kompostierung organischer Stoffe solcher wie sortierte Haushaltsabfälle, organischer Schlamm aus den Wasserkläranlagen oder der Abwasserindustrie, Holzspäne, Stroh, Stalldung, bekannt. DE 197 10 027 A1 offenbart ein Verfahren und eine Vorrichtung zum Kompostieren organischer Stoffe. EP 0 621 248 A1 offenbart eine Einrichtung zum Kompostieren von organischen Abfällen bestehend aus mindestens einem tunnelartigen Kasten, in dessen Bodenbereich ein endloser, umlaufender Kratzbodenförderer angeordnet ist. DE 8806535 U1 offenbart eine Vorrichtung zum Mischen, Belüften, Umsetzen und Fördern von kompostierbaren Abfallstoffen. DE 198 33 624 A1 offenbart eine Vorrichtung zur biologischen, hydro- und sero-mechanischen Behandlung von biogenen Abfällen mit hohem Feststoffanteil sowie mit bzw. ohne Störstoffe. WO 02/060837 A2 offenbart eine Kompostierungsstruktur und ein Verfahren für einen Nutztierbetrieb.

Es ist daher eine Aufgabe der vorliegenden Erfindung, eine modulare Kompostierungs-Anlage und ein Kompostierungsverfahren bereitzustellen, die einen oder mehrere der genannten Nachteile verringern oder beseitigen und/oder gegenüber existierenden Lösungen verbessert sind.

Es ist insbesondere eine Aufgabe der vorliegenden Erfindung, eine modulare Kompostierungs-Anlage und ein Kompostierungsverfahren bereitzustellen, die den Kompostierungsprozess vereinfachen und/oder verbessern. Es ist ferner eine Aufgabe der vorliegenden Erfindung, eine modulare Kompostierungs-Anlage und ein Kompostierungsverfahren bereitzustellen, die eine kostengünstige Lösung, insbesondere für Herstellung, Transport und/oder Betrieb ermöglichen.

Diese Aufgabe wird gemäß einem ersten Aspekt der Erfindung gelöst durch eine modulare Kompostierungs-Anlage nach Anspruch 1.

Kompostmaterial wird über das Eintragsende eingebracht und über das Austragsende ausgebracht. In der Regel wir pro Tag eine bestimmte Eintragsmenge an Rohmaterial eingebracht und pro Tag eine bestimmte Austragsmenge an Endprodukt ausgetragen. Zwischen dem Eintragsende und dem Austragsende liegt die Kompostierungsstrecke, entlang derer der Kompostierungsprozess stattfindet. Die Auflockerungsvorrichtung dient dazu, dass Kompostmaterial aufzulockern und/oder zu bewegen und/oder zu zerkleinern, insbesondere entlang der Kompostierungsstrecke und/oder vorzugsweise 1-2 Mal pro Tag. Dadurch wird vorzugsweise das Kompostmaterial zersetzt und/oder seine Oberfläche vergrößert. Über die Belüftungsvorrichtung wird vorzugsweise der für den Kompostierungsprozess benötigte Sauerstoff in Form von Luft bereitgestellt. Die Auflockerungsvorrichtung und die Belüftungsvorrichtung werden von einer Steuerungsvorrichtung gesteuert.

Wie im Folgenden auch noch näher beschrieben wird, wird der transportable Kompostierungs-Container, vorzugsweise mit ein, zwei oder mehreren Kompostierungskanal-Containern zu einer kanalförmigen, modularen Kompostierungs-Anlage zusammengesetzt und betrieben. Dabei werden die Kompostierungs-Container und Kompostierungskanal-Container vorzugsweise an ihren Stirnseiten verbunden und die Seitenwände von aneinander angrenzenden Stirnseiten entfernt oder geöffnet, um einen über sämtliche Kompostierungs-Container und Kompostierungskanal-Container durchgehende Gesamt-Kompostierungsstrecke zu erhalten. Über die Anzahl der verbundenen Kompostierungs-Container und Kompostierungskanal-Container kann die Länge der Gesamt-Kompostierungsstrecke und damit auch die Kapazität der modularen Kompostierungs-Anlage variiert werden. In einer Minimalvariante kann auch lediglich ein Kompostierungs-Container verwendet werden. In diesem Fall entspricht dann die Gesamt-Kompostierungsstrecke der Kompostierungs-Anlage der Kompostierungsstrecke vom Eintragsende zum Auftragsende des Kompostierungs-Containers. Wenn die modulare Kompostierungs-Anlage um einen oder mehrere Kompostierungskanal-Container erweitert wird, verdoppelt bzw. vervielfacht sich die Gesamt-Kompostierungsstrecke entsprechend und erstreckt sich vorzugsweise von einem Eintragsende am Kompostierungskanal-Container zu einem Austragsende am Kompostierungs-Container. Vorzugsweise entspricht das Eintragsende des Kompostierungs-Containers einer solchen zusammengesetzten Kompostierungs-Anlage der offenen Stirnseite des Kompostierungs-Containers, an den ein Kompostierungskanal-Container angrenzt.

Die Erfindung beruht unter anderem auf der Erkenntnis, dass eine besonders kostengünstige Lösung erzielt werden kann, wenn der transportable Kompostierungs-Container möglichst viele, wenn nicht gar alle wesentlichen Funktionselemente umfasst. Solche Funktionselemente sind insbesondere die Auflockerungsvorrichtung, die Belüftungsvorrichtung und die Steuerungsvorrichtung. Weitere, ebenfalls im Folgenden beschriebene Funktionselemente sind insbesondere eine Austragsvorrichtung und/oder eine Bewässerungsvorrichtung und/oder eine Dachabdeckung und/oder eine Luftreinigungseinheit.

Auf diese Weise wird mit dem transportablen Kompostierungs-Container eine minimale, funktionsfähige Variante einer modularen Kompostierungs-Anlage geschaffen, die leicht und kostengünstig transportabel ist. Da alle für die Basisfunktion erforderlichen Funktionselemente bereits in Kompostierungs-Container enthalten sind, ist am Betriebsort, abgesehen gegebenenfalls von Versorgungsleitungen, keine nennenswerte Infrastruktur und insbesondere keine Investitionen erforderlich, die über den Platz zur Aufstellung der modulare Kompostierungs-Anlage hinausgehen.

Soll diese dann erweitert werden, sind lediglich zusätzliche Kompostierungskanal-Container erforderlich, mit denen die Gesamt-Kompostierungsstrecke kanalförmig verlängert werden kann, die jedoch keine oder zumindest deutlich weniger Funktionselemente umfassen müssen als der Kompostierungs-Container. Diese Kompostierungskanal-Container können daher deutlich kostengünstiger hergestellt werden als etwa der Kompostierungs-Container. Somit fallen nur einmal die Herstellung und gegebenenfalls Transportkosten für einen Kompostierungs-Container mit den Funktionselementen an. Die Kompostierungskanal-Container sind günstiger und können gegebenenfalls auch durch vor Ort erhältliche, herkömmliche Container, gegebenenfalls mit geringfügigen Modifikationen, ausgebildet sein. Beispielsweise können auch einige weitere Funktionselemente, die in den für die Erweiterung erforderlichen Kompostierungskanal-Containern im Betriebszustand angebracht sein müssen, in Transportzustand bereits mit und in Kompostierungs-Container mitgeliefert werden. Beim Zusammenbau der modularen Kompostierungs-Anlage können diese dann an die zusätzlichen Kompostierungskanal-Container angebracht werden.

Ferner kann auch bevorzugt sein, dass neben dem transportablen Kompostierungs-Container mit möglichst vielen wesentlichen Funktionselementen ein weiterer Funktions-Container vorgesehen ist, in dem ebenfalls Funktionselemente vorgesehen sind, vorzugsweise komplementäre und/oder ergänzende Funktionselemente zu den im transportablen Kompostierungs-Container angeordneten Funktionselementen. Bevorzugt ist es, dass in einer modularen Kompostierungs-Anlage der Kompostierungs-Container und der Funktions-Container an den beiden stirnseitigen Enden der modularen Kompostierungs-Anlage angeordnet sind und das Eintragsende und das Austragsende der Kompostierungsstrecke bilden bzw. umfassen. Es kann beispielsweise bevorzugt sein, dass der Funktions-Container weitere Funktionselemente umfasst. Diese weiteren Funktionselemente können z. B sein eine Austragsvorrichtung und/oder eine Austragsöffnung und/oder eine Inspektionsplattform und/oder eine Eintragsvorrichtung, beispielsweise eine Fördervorrichtung, etwa eine Förderschnecke, ein Förderband oder eine Materialrutsche. Beispielsweise kann auch eine Dachabdeckung am Funktions-Container teilweise geöffnet oder öffenbar ausgestaltet sein, um den Eintrag von Kompostmaterial zu erleichtern oder zu ermöglichen.

Als transportabel wird in dieser Beschreibung insbesondere ein Container, beispielsweise ein Kompostierungs-Container und/oder ein Funktions-Container und/oder ein Kompostierungskanal-Container, angesehen, wenn dieser Container einen Transportzustand aufweisen kann, in dem er beispielsweise auf einem Containerschiff auf dem Seeweg und/oder auf einem Containerchassis auf der Straße und/oder einem Contrainertragwagen auf der Schiene und/oder in einem Frachtflugzeug auf dem Luftweg transportiert werden kann. Dabei kann es vorzugsweise ausreichend sein, dass der Container auf dem Weg zu seinem Einsatzort transportabel ist, und der Container an seinem Einsatzort dauerhaft befestigt wird, beispielsweise durch Einbetonieren, und/oder seine Transportfähigkeit am Einsatzort verliert.

Gemäß einer bevorzugten Ausführungsform ist vorgesehen, dass in einem Transportzustand des Kompostierungs-Containers die Auflockerungsvorrichtung und die Belüftungsvorrichtung, vorzugsweise auch die Steuerungsvorrichtung, vollständig innerhalb des Kompostierungs-Containers angeordnet sind. Insbesondere ist es bevorzugt, dass sämtliche Funktionselemente in einem Transportzustand des Kompostierungs-Containers vollständig innerhalb des Kompostierungs-Containers angeordnet sind.

Die Steuerungsvorrichtung kann beispielsweise an einer Stirnseite des Kompostierungs-Containers in einem abgetrennten, durch stirnseitige Zugangstüren zugänglichen Steuerungsraum angeordnet sein. Ein solcher Steuerungsraum ist vorzugsweise gegenüber dem Kompostierungskanal abgedichtet, sodass kein Kompostmaterial, insbesondere keine Flüssigkeit und/oder Feuchtigkeit, in den Steuerungsraum gelangen kann. Auch der Steuerungsraum ist im Transportzustand vorzugsweise vollständig innerhalb des Kompostierungs-Containers angeordnet. Im Betriebszustand und/oder am Einsatzort kann die Steuerungsvorrichtung vorzugsweise auch außerhalb des Kompostierungs-Containers angeordnet sein, beispielsweise benachbart und/oder beabstandet zu dem Kompostierungs-Container. Die Steuerungsvorrichtung kann vorzugsweise leitungsgebunden oder leitungsungebunden im Betriebszustand und/oder am Einsatzortmit dem Kompostierungs-Containers und/oder Funktionselementen verbunden sein.

Auch ist bevorzugt (bei Vorhandensein eine Funktions-Containers), dass im Transportzustand des Funktions-Containers seine Funktionselemente vollständig innerhalb des Funktions-Containers angeordnet sind.

Auf diese Weise kann der Kompostierungs-Container besonders einfach und kostengünstig transportiert werden. Besonders bevorzugt ist es daher auch, dass der Kompostierungs-Container (und vorzugsweise, soweit vorhanden, auch der Funktions-Container) und/oder der Kompostierungskanal-Container ein genormter Container ist und/oder im Transportzustand den Maßen eines genormten Containers entspricht. Besonders bevorzugt ist, dass der Kompostierungs-Container und/oder der Kompostierungskanal-Container und/oder der Funktions-Container ein genormter ISO-Container, insbesondere ein 20-Fuß-Container, ein 40-Fuß-Container oder ein 40-Fuß-High-Cube-Container, ist und/oder im Transportzustand den Maßen eines genormten ISO-Containers, insbesondere eines 20-Fuß-Containers, eines 40-Fuß-Containers oder eines 40-Fuß-High-Cube-Containers, entspricht. Bevorzugt kann der Kompostierungs-Container und/oder der Kompostierungskanal-Container und/oder der Funktions-Container ein genormter Luftfrachtcontainer sein oder im Transportzustand den Maßen eines genormten Luftfrachtcontainers entsprechen. Am Aufstellungsort der modularen Kompostierungs-Anlage wird der Kompostierungs-Container und/oder der Kompostierungskanal-Container und/oder der Funktions-Container dann durch entsprechenden Auf- und Anbau der Funktionselemente dann betriebsbereit installiert.

Vorzugsweise weist der Kompostierungs-Container und/oder der Kompostierungskanal-Container und/oder der Funktions-Container eine Innenwandverkleidung auf. Vorzugsweise umfasst die Innenwandverkleidung ein korrosionsfreies Material, insbesondere Edelstahl und/oder Polymer, oder besteht daraus. Die Innenwandverkleidung kann beispielsweise Tafelelemente umfassen, die vorzugsweise flüssigkeitsdicht miteinander verbunden sind, bspw. durch eine Niet-/Schraub- und Dicht-/Klebe-Verbindung. Dies ist vorteilhaft, da rostende Stähle durch die aggressiven Bedingungen schnell korrodieren würden.

Der transportable Kompostierungs-Container weist vorzugsweise eine Austragsöffnung auf. Diese ist vorzugsweise am oder nahe am Austragsende angeordnet und ferner vorzugsweise im Boden des Kompostierungs-Containers angeordnet. Auf diese Weise kann das Kompostmaterial allein oder unterstützt durch Schwerkrafteinfluss aus der Austragsöffnung austreten. Die Austragsöffnung kann verschließbar ausgebildet sein. Die Austragsöffnung erstreckt sich vorzugsweise quer zur Kompostierungsstrecke. Ferner erstreckt sich die Austragsöffnung vorzugsweise über einen Großteil der Breite des transportablen Kompostierungs-Containers, insbesondere über mehr als 50% der Breite, mehr als 60% der Breite, mehr als 80% der Breite oder mehr als 90% der Breite.

Eine weitere bevorzugte Weiterbildung ist gekennzeichnet durch eine am Austragsende angeordnete Austragsvorrichtung, die vorzugsweise als Förderschnecke ausgebildet ist. Ferner befindet sich die Austragsvorrichtung vorzugsweise unterhalb der Austragsöffnung. Im Transportzustand des Kompostierungs-Containers befindet sich vorzugsweise die Austragsvorrichtung vollständig innerhalb des Kompostierungs-Containers. Die Austragsvorrichtung fördert das Kompostmaterial vorzugsweise an einer Seite des Kompostierungs-Containers, von wo aus das Kompostmaterial dann weiter gefördert oder verladen werden kann.

Die Förderschnecke am Austragsende dient zum Abfördern von kompostiertem Kot und befindet vorzugsweise sich im Boden, und verläuft ferner vorzugsweise quer zur Längserstreckungsrichtung des Containers über die gesamte Breite des Bodens.

In einer bevorzugten Ausführungsform ist über der Austragsvorrichtung mindestens eine Zuführvorrichtung angeordnet, beispielsweise in Form einer drehbaren Reißwalze, die vorzugsweise langsam dreht. Besonders bevorzugt sind zwei Zuführvorrichtungen, insbesondere zwei langsam drehende Reißwalzen. Die Zuführvorrichtungen führen das Kompostmaterial der Austragsvorrichtung zu, bei Reißwalzen insbesondere durch ihre Drehung. Vorzugsweise drehen die Reißwalzen gegenläufig zueinander. Ferner vorzugsweise besitzt die mindestens eine Zuführvorrichtung, insbesondere die beiden Reißwalzen, Klingen, Schwerter o.ä., Elemente zur Auflockerung. Die mindestens eine Zuführvorrichtung ermöglicht somit eine kontrollierte Zuführung (Dosierung) von Material. Auf diese Weise kann sowohl verhindert oder verringert werden, dass sich Kompostmaterialbrücken bilden und die Austragsvorrichtung nicht genug Material zum Austragen erhält und im z.T. Leeren läuft, als auch, dass die Austragsvorrichtung aufgrund von zu viel zugeführtem Material verstopft.

In einer bevorzugten Ausführungsform umfasst der transportable Kompostierungs-Container eine Fördervorrichtung, die mit der Austragsvorrichtung ausgetragenes Kompostmaterial weiterfördert, vorzugsweise nach oben. Diese Fördervorrichtung kann beispielsweise als Schrägförderschnecke ausgebildet sein. Im Transportzustand des Kompostierungs-Containers befindet sich die Fördervorrichtung vorzugsweise vollständig innerhalb des Kompostierungs-Containers.

In einer bevorzugten Ausführungsform ist vorgesehen, dass die Auflockerungsvorrichtung eine um eine Drehachse drehbar angeordnete und mit Zähnen versehene Walze umfasst, wobei die Drehachse im Wesentlichen horizontal und im Wesentlichen orthogonal zur Kompostierungsstrecke ausgerichtet ist. Hiermit lässt sich eine besonders gute Auflockerungswirkung im Kompostmaterial erzielen.

Gemäß einer weiteren bevorzugten Ausführungsform ist vorgesehen, dass die Auflockerungsvorrichtung an und/oder auf gegenüberliegenden, parallel zur Kompostierungsstrecke verlaufenden Seitenwänden beweglich geführt ist. Auf diese Weise lässt sich die Auflockerungsvorrichtung entlang der Kompostierungsstrecke vor und zurück bewegen. Hierzu weist die Auflockerungsvorrichtung vorzugsweise eine elektrische und/oder hydraulische Antriebsvorrichtung auf. Eine Bewegung entlang der Kompostierungsstrecke durch das Kompostmaterial bewirkt auch eine Bewegung des Kompostmaterials entlang der Kompostierungsstrecke.

Es ist ferner bevorzugt, dass die Auflockerungsvorrichtung um eine im Wesentlichen horizontal ausgerichtete Schwenkachse schwenkbar gelagert ist. Eine bevorzugte Weiterbildung zeichnet sich dadurch aus, dass die Auflockerungsvorrichtung von einer Betriebsposition in eine Ruheposition bringbar ist, vorzugsweise durch Verschwenken um die Schwenkachse. In der Betriebsposition ist die Walze der Auflockerungsvorrichtung vorzugsweise so angeordnet, dass sie sich im Kompostmaterial, vorzugsweise einem unteren, bodennahen Bereich des Kompostmaterials, befindet. In der Ruheposition ist die Walze der Auflockerungsvorrichtung vorzugweise so angeordnet, dass sie sich oberhalb des Kompostmaterials befindet. Vorzugsweise wird die Auflockerungsvorrichtung am oder nahe am Eintragsende in die Betriebsposition gebracht und von dort entlang der Kompostierungsstrecke bewegt, vorzugsweise während sich die mit Zähnen versehene Walze um die Drehachse dreht. Am oder nah am Austragsende wird die Auflockerungsvorrichtung vorzugsweise in die Ruheposition verschwenkt, und in dieser Ruheposition zurück zum Eintragsende bewegt.

Vorzugsweise kann die Auflockerungsvorrichtung in der Ruheposition von einer Ruhehaube abgedeckt sein.

Ferner ist die Auflockerungsvorrichtung in eine Parkposition bringbar, wobei die Parkposition außerhalb des Kompostierungskanals und/oder außerhalb der Kompostierungsstrecke angeordnet ist. Die Auflockerungsvorrichtung ist insbesondere von der Ruheposition aus in die Parkposition bringbar, und vorzugsweise auch von der Parkposition wieder in die Ruheposition, vorzugsweise durch Verschwenken um die Schwenkachse. Die Parkposition entspricht vorzugsweise der Betriebsposition mit dem Unterschied, dass die Parkposition außerhalb des Kompostierungskanals und/oder außerhalb der Kompostierungsstrecke angeordnet ist. Insbesondere zeichnet sich die Parkposition dadurch aus, dass die Walze der Auflockerungsvorrichtung in der Parkposition gut zugänglich ist, insbesondere von Personal, beispielsweise zu Wartungs- und/oder Reinigungszwecken, und/oder dass sich die Walze der Auflockerungsvorrichtung in der Parkposition nicht in Kompostmaterial befindet. Vorzugsweise ist die Parkposition benachbart zum Eintragsende angeordnet.

Der Vorteil liegt hier insbesondere in der Wartbarkeit und/oder Reinigbarkeit der Auflockerungsvorrichtung. Ferner kann die Parkposition in vorteilhafter Weise zur Erhöhung der Standzeit der Auflockerungsvorrichtung beitragen, insbesondere wenn die Auflockerungsvorrichtung in die Parkposition gebracht wird, wenn sie nicht in Betrieb ist, denn die Atmosphäre innerhalb des Kompostierungs-Kanals und/oder entlang der Kompostierungsstrecke ist stark korrosionsfördernd.

Vorzugsweise ist am Eintragsende der Kompostierungsstrecke eine Tür angeordnet, die in geöffnetem Zustand ausgebildet ist, die Auflockerungsvorrichtung - vorzugsweise in deren Ruheposition - in den Kompostierungskanal eintreten zu lassen und/oder aus dem Kompostierungskanal austreten zu lassen. Vorzugsweise ist die Tür an einer Dachabdeckung angeordnet, insbesondere an deren Stirnseite am Eintragsende.

Die Auflockerungsvorrichtung wird vorzugsweise wie folgt eingesetzt. Der Eintritt der Auflockerungsvorrichtung in den Kompostierungskanal erfolgt vorzugsweise über die Tür. Dabei ist die Walze der Auflockerungsvorrichtung vorzugsweise hochgeschwenkt und befindet sich in der Ruheposition, so dass die Auflockerungsvorrichtung durch die Tür in der Dachabdeckung fährt. Die Auflockerungsvorrichtung fährt dann vorzugsweise zum Austragsende und schwenkt dort in die Betriebsposition, bei der die Walze in das Kompostmaterial taucht, und verfährt dann bis zum Eintragsende, wo die Walze wieder hochgeschwenkt und die Auflockerungsvorrichtung in die Ruheposition gebracht wird.

Besonders bevorzugt ist, dass die Steuerungsvorrichtung ausgebildet ist, eine aktuelle Position der Auflockerungsvorrichtung entlang der Kompostierungsstrecke und/oder auch außerhalb des Kompostierungskanals und/oder entlang der, insbesondere linearen, Verfahrachse der Auflockerungsvorrichtung, zu ermitteln. Vorzugsweise erfolgt dies mit Landmarken, bspw. ammoniakresistenten RFID-Tags die entlang der Kompostierungsstrecke und/oder des Kompostierungs-Kanals und/oder entlang des Verfahrwegs an, vorzugsweise definierten, Positionen angebracht werden. Am Auflockerungsvorrichtung ist vorzugsweise ein Positionssensor zum Auslesen der Landmarken befestigt. Eine Prozessüberwachung kann auf diese Weise vorteilhaft sichergestellt werden.

Gemäß einer weiteren bevorzugten Ausführungsform ist vorgesehen, dass die Belüftungsvorrichtung mindestens ein Rohr mit Belüftungsöffnungen umfasst, wobei vorzugsweise die Belüftungsöffnungen und/oder das Rohr mit einer luftdurchlässigen Abdeckung versehen sind. Diese Ausgestaltung einer Belüftungsöffnung ist besonders bevorzugt, da sie einfach und kostengünstig zu realisieren ist. Ein weiterer Vorteil dieser Ausgestaltung der Belüftungsvorrichtung ergibt sich dadurch, dass beispielsweise im Kompostierungs-Container im Transportzustand auch die Rohre mit Belüftungsöffnungen für zusätzliche Kompostierungskanal-Container des angeordnet und mit bzw. im dem Kompostierungs-Container transportiert werden können.

Das mindestens eine Rohr mit Belüftungsöffnungen ist im Betriebszustand vorzugsweise parallel zum Boden des Kompostcontainers verlegt, beispielsweise in Richtung parallel zur Kompostierungsstrecke. Vorzugsweise sind mehrere Rohre mit Belüftungsöffnungen, Vorzugsweise parallel zueinander, am Boden des Kompostierungskanal-Containers angeordnet.

Es ist ferner bevorzugt, dass die Belüftungsvorrichtung einen Kompressor umfasst, der ausgebildet ist, einen Volumenstrom bereitzustellen, vorzugsweise in das mindestens eine Rohr. So kann ein Gas, insbesondere Luft, vorzugsweise von unten, in das Kompostmaterial eingebracht werden. Da beim Kompostieren das Kompostmaterial aerob, also unter Einfluss von Sauerstoff, umgewandelt wird, ist die Zufuhr von Luft in das Kompostmaterial von großer Bedeutung.

Auch ein Kompostierungskanal-Container weist vorzugsweise mindestens ein Rohr mit Belüftungsöffnungen auf, wobei vorzugsweise die Belüftungsöffnungen und/oder das Rohr mit einer luftdurchlässigen Abdeckung versehen sind. Ferner vorzugsweise sind die Rohre des Kompostierungs-Containers und des Kompostierungskanal-Container mit einander verbunden. Auf diese Weise kann ein - entsprechend dimensionierter - Kompressor des Kompostierungs-Containers auch die Rohre eines oder mehrerer Kompostierungskanal-Container mit Druckluft versorgen, sodass vorzugsweise keine weiteren Kompressoren für die Kompostierungskanal-Container erforderlich sind.

In einer bevorzugten Ausführungsform erfolgt die Belüftung vorzugsweise über einen doppelten Boden. Dazu ist vorzugsweise pro Container, insbesondere pro Kompostierungs-Container und/oder Kompostierungskanal-Container und/oder pro Funktions-Container, ein, zwei oder mehrere Kompressoren, vorzugsweise seitlich, am Container angeordnet. Der Kompressor ist vorzugsweise ausgebildet, Außenluft durch eine Kompressoröffnung in einen Zwischenraum des doppelten Bodens des Containers zu fördern. Vorzugsweise umfasst der doppelte Boden ein korrosionsfreies Material, insbesondere Edelstahl und/oder Polymer, oder besteht daraus. Vorzugsweise weist ein oberer Boden des doppelten Bodens Bodenöffnungen auf, durch die Luft nach oben in das darüber liegende Kompostmaterial gelangen und das Kompostmaterial belüften kann.

Vorzugsweise weisen die Belüftungsöffnungen und/oder Bodenöffnungen eine Senklochform auf, insbesondere derart, dass sich die Belüftungsöffnungen und/oder Bodenöffnungen von der Luftzuführungsseite hin zu Austrittsseite am Kompostmaterial verjüngen. Vorzugsweise sind in etwa 3 Belüftungsöffnungen und/oder Bodenöffnungen pro Quadratmeter Containerboden vorgesehen und/oder bilden die Belüftungsöffnungen und/oder Bodenöffnungen eine rel. offene Fläche von 0,01 % des Containerbodens.

Dies hat insbesondere den Vorteil, dass eine ungleiche Druckverteilung und/oder eine ungleiche Luftversorgung des Kompostmaterials verhindert oder verringert werden kann.

Vorzugsweise werden Belüftungsöffnungen und/oder Bodenöffnungen mit einer Austrittsfläche von 35,5mm² eingesetzt. Weiterhin kann sich das Verhältnis von Belüftungsöffnungsfläche (also insbesondere der offenen Fläche der Belüftungsöffnungen und/oder Bodenöffnungen) zu verschlossener Fläche an der Luftzuführungsseite vom Verhältnis an der Austrittsseite unterscheiden.

Vorzugsweise ist die Steuerungsvorrichtung ausgebildet, die Belüftung in Abhängigkeit des gemessenen Sauerstoffgehalts im Kompostmaterial zu steuern.

In einer weiteren bevorzugten Ausgestaltung ist vorgesehen, dass eine Entwässerung von Flüssigkeiten, die während der Kompostierung anfallen, durch den doppelten Boden hinweg erfolgt. Dazu ist vorzugsweise eine Entwässerungsöffnung vorgesehen Die Entwässerungsöffnung ist vorzugsweise anschließend an der Innenseite des Containers angeordnet. Ferner vorzugsweise ist die Entwässerungsöffnung nach außen geführt. Um einen Luftaustritt des Belüftungsstroms zu vermeiden, ist es bevorzugt, dass anschließend an die Entwässerungsöffnung ein Siphon angeordnet ist, der zwar die Flüssigkeiten passieren lässt, einen Gasaustritt, insbesondere einen Luftaustritt, aber verhindert.

Eine weitere bevorzugte Weiterbildung umfasst einen oder mehrere Sensoren zur Ermittlung von einem oder mehreren Kompostierungsparametern, insbesondere Temperatur und/oder Feuchtigkeit und/oder pH-Wert und/oder Sauerstoffgehalt, und/oder eine oder mehrere Messlanzen zur Ermittlung von einem oder mehreren Kompostierungsparametern, insbesondere Temperatur und/oder Feuchtigkeit und/oder pH-Wert und/oder Sauerstoffgehalt.

Der Kompostierungsprozess verläuft in der Regel in mehreren Phasen, insbesondere umfasst der Kompostierungsprozess eine Fermentationsphase, eine Abkühlungsphase und eine Reifephase. Für den Kompostierungsprozess, insbesondere in dessen unterschiedlichen Phasen, sind verschiedene Kompostierungsparameter, insbesondere deren Einhaltung in bevorzugten Bereichen, für die Qualität des Prozesses und des Endprodukts wichtig. Damit der Kompostierungsprozess entsprechend gesteuert werden kann, ist es zunächst erforderlich, die Werte dieser Kompostierungsparameter mittels Sensoren festzustellen. Im Transportzustand des Kompostierungs-Containers befinden sich die Sensoren vorzugsweise vollständig innerhalb des Kompostierungs-Containers. Vorzugsweise enthält der Kompostierungs-Container im Transportzustand in seinem Inneren einen oder mehrere Sensoren, die in einem Betriebszustand einer modularen Kompostierungs-Anlage in einem oder mehreren Kompostierungskanal-Containern angeordnet sind.

Alle oder ein Teil der Sensoren für die Überwachung der Prozessparameter sind vorzugsweise im Innenraum des Kompostierungs-Containers und/oder des Kompostierungskanal-Containers und/oder des Funktions-Containers und/oder des Kompostierungs-Kanals angebracht. Bspw. messen die Sensoren die Luftqualität, insbesondere O2 und/oder CO2 und/oder NH3 und/oder Temperatur.

Sensoren können vorzugsweise auch in das Kompostmaterial eingeführt werden. Hierzu ist vorzugsweise eine oder mehrere Messlanzen vorgesehen.

Eine Messlanze wird vorzugsweise über eine Außenseite des Kompostierungs-Containers und/oder des Kompostierungskanal-Containers und/oder des Funktions-Containers in das Kompostmaterial eingeführt, insbesondere automatisiert. Das Einführen der Messlanze erfolgt vorzugsweise über eine Anordnung mit Reibrädern an einer Seitenwand des Kompostierungs-Containers und/oder des Kompostierungskanal-Containers und/oder des Funktions-Containers, insbesondere automatisch. Ein Ende der Messlanze verbleibt vorzugsweise stets außerhalb des Kompostierungs-Containers und/oder des Kompostierungskanal-Containers und/oder des Funktions-Containers. Vorzugsweise ist die Steuerungsvorrichtung ausgebildet, die Einführung der Messlanze zu steuern.

Die Messlanze weist bevorzugt einen Eintrittswinkel von 60° in Bezug auf die Seitenwand des Kompostierungs-Containers und/oder des Kompostierungskanal-Containers und/oder des Funktions-Containers auf. Die Eintrittsrichtung ist vorzugsweise von oben nach unten gerichtet. Die Messlanze verbleibt vorzugsweise eingeführt im Kompostmaterial. Sie wird nur vorzugsweise dann aus dem Kompostmaterial mit Hilfe der Anordnung mit Reibrädern herausgeführt, wenn die Auflockerungsvorrichtung das Kompostmaterial umwirft.

Die Messlanze, insbesondere deren Komponenten, die im Kompostierungs-Kanal und/oder im Kompostmaterial angeordnet sind, umfasst vorzugsweise ein korrosionsfreies Material, insbesondere Edelstahl und/oder Polymer, oder besteht daraus.

Vorzugsweise weist die Messlanze an einer Messspitze Lanzensensoren für O2 und/oder die Temperatur auf. Die Messspitze der Messlanze besitzt vorzugsweise Ausnehmungen, die ausgebildet sind, die Lanzensensoren mit dem Kompostmaterial und/oder den Bedingungen im Kompost in Verbindung zu bringen. Vorzugsweise werden die Lanzensensoren aber gleichzeitig durch die Messspitze geschützt.

An dem außerhalb des Kompostierungs-Containers und/oder des Kompostierungskanal-Containers und/oder des Funktions-Containers verbleibenden Ende der Messlanze kann vorzugsweise eine Verbindung angeordnet sein, bspw. eine drahtgebundene Kontaktierung. Daher weist die Messlanze vorzugsweise eine längsverlaufende Nut auf, die ausgebildet ist, ein Führungsmittel einzuführen, um eine Verdrehung der Messlanze und/oder von deren Ende zu verhindern oder zu verringern.

Um die Eindringtiefe und/oder generell den ein- und/oder ausgefahrenen Zustand der Messlanze zu erkennen, können vorzugsweise Markierungen an der Messlanze vorgesehen sein, die vorzugsweise von einem Messlanzenpositionssensor erkennbarsind. In einer bevorzugten Ausführungsform ist der Querschnitt der Messlanze an den erforderlichen Positionsmessstellen reduziert, bspw. in Form eines Absatzes, so dass ein induktiv arbeitender Messlanzenpositionssensor einen geänderten Abstand misst und daraufhin ein Signal auslöst. Eine weitere bevorzugte Ausführungsform umfasst eine Bewässerungsvorrichtung und/oder eine Dachabdeckung und/oder eine Luftreinigungseinheit, die insbesondere ausgebildet ist, einen Ammoniakgehalt von Luft zu reduzieren.

Über eine Bewässerungsvorrichtung kann eine Flüssigkeit, insbesondere Wasser, in oder auf das Kompostmaterial bereitgestellt werden. Hierdurch kann verhindert werden, dass das Kompostmaterial zu trocken wird und der Kompostierungsprozess eventuell nicht optimal abläuft. Vorzugsweise enthält der Kompostierungs-Container im Transportzustand in seinem Inneren eine Bewässerungsvorrichtung mit Bewässerungselementen, die in einem Betriebszustand einer modularen Kompostierungs-Anlage in einem oder mehreren Kompostierungskanal-Containern angeordnet sind.

Bei der Kompostierung entstehen verschiedene Abbauprodukte, insbesondere auch Ammoniak, welcher eine unerwünschte Emission darstellt. Die Dachabdeckung umschließt einen Raum oberhalb der Seitenwände des Kompostierungs-Containers vorzugsweise fluiddicht oder im Wesentlichen fluiddicht, insbesondere luftdicht oder im Wesentlichen luftdicht. Die Dachabdeckung kann eine Zuluftöffnung und/oder eine Abluftöffnung aufweisen. Auf diese Weise kann ein unkontrollierter Luftaustritt, insbesondere von mit unerwünschten Emissionen belasteter Luft, verhindert werden. Vorzugsweise enthält der Kompostierungs-Container im Transportzustand in seinem Inneren eine Gesamt-Dachabdeckung mit Dachabdeckungselementen, die in einem Betriebszustand einer modularen Kompostierungs-Anlage die Dachabdeckung nicht nur des Kompostierungs-Containers sondern auch die Dachabdeckung von einem oder mehreren Kompostierungskanal-Containern bilden.

Das Vorsehen einer Luftreinigungseinheit ist ferner bevorzugt, insbesondere in Kombination mit einer Dachabdeckung. Die Luftreinigungsanlage ist vorzugsweise ausgebildet und angeordnet, Luft vor deren Austritt aus der Dachabdeckung zu reinigen und insbesondere den Ammoniakgehalt vor dem Austritt deutlich zu reduzieren. Vorzugsweise ist die Luftreinigungseinheit für eine modulare Kompostierungs-Anlage mit einem Kompostierungs-Container und mindestens einem Kompostierungskanal-Container dimensioniert. Auf diese Weise ist es nicht erforderlich, auch die Kompostierungskanal-Container mit einer Luftreinigungseinheit auszustatten.

Bei der Kompostierung kann es zu nicht unerheblichen Emissionen von Ammoniak kommen. Wir hoch diese Emissionen sind, ist stark abhängig von den Prozessparametern, mit denen eine Anlage betrieben wird. Eine gezielte Abfuhr der Abluft, insbesondere durch eine Luftreinigungseinheit, ist daher vorteilhaft. Hierzu ist vorzugsweise ein Abluftschacht vorgesehen, der sich vorzugsweise an eine weitestgehend luftdichte Dachabdeckung anschließt.

Eine bevorzugte Weiterbildung zeichnet sich dadurch aus, dass die Steuerungsvorrichtung ausgebildet ist, die Auflockerungsvorrichtung und/oder die Belüftungsvorrichtung und/oder die Austragvorrichtung und/oder die Bewässerungsvorrichtung und/oder die Luftreinigungseinheit in Abhängigkeit von dem einen oder mehreren Kompostierungsparametern zu steuern. Vorzugsweise können der Steuerungsvorrichtung bevorzugte Werte und/oder Wertebereiche für die Kompostierungsparameter vorgegeben werden, beispielsweise von einem Benutzer. Die Steuerungsvorrichtung ist vorzugweise ausgebildet, die Steuerung dann so vorzunehmen, dass von den bevorzugten Werten und/oder Wertebereichen abweichende Kompostierungsparameter durch eine entsprechende Steuerung der Auflockerungsvorrichtung und/oder der Belüftungsvorrichtung und/oder der Austragvorrichtung und/oder der Bewässerungsvorrichtung und/oder der Luftreinigungseinheit wieder in oder näher an den bevorzugten Wert und/oder Wertebereich zu bringen. Auf diese Weise kann die Qualität des Kompostierungsprozesses und des Kompostierungsergebnisses erhöht werden.

Die modulare Kompostierungs-Anlage umfasst einen zuvor beschriebenen transportablen Kompostierungs-Container und einen transportablen Kompostierungskanal-Container und/oder Funktions-Container, der mit dem Kompostierungs-Container verbunden ist bzw. sind, so dass sich eine im Wesentlichen horizontal ausgerichtete Gesamt-Kompostierungsstrecke über den Kompostierungs-Container und den Kompostierungskanal-Container und/oder den Funktions-Container erstreckt.

In einer bevorzugten Ausführungsform der modularen Kompostierungs-Anlage ist vorgesehen, dass das Eintragsende am Kompostierungskanal-Container und das Austragsende am Kompostierungs-Container angeordnet ist. Das Eintragsende und das Austragsende sind vorzugsweise an einander abgewandten oder gegenüberliegenden Enden der modularen Kompostierungs-Anlage angeordnet.

Eine weitere bevorzugte Weiterbildung der modularen Kompostierungs-Anlage umfasst zwei, drei oder mehrere transportable Kompostierungskanal-Container.

Besonders bevorzugt ist es, wenn im Transportzustand der transportable Kompostierungs-Container der modularen Kompostierungs-Anlage möglichst viele, wenn nicht gar alle wesentlichen Funktionselemente umfasst. Solche Funktionselemente sind insbesondere die Auflockerungsvorrichtung, die Belüftungsvorrichtung und die Steuerungsvorrichtung, sowie vorzugsweise die Austragsvorrichtung und/oder die Bewässerungsvorrichtung und/oder die Dachabdeckung und/oder die Luftreinigungseinheit. Insbesondere ist es bevorzugt, dass im Kompostierungs-Container im Transportzustand auch einige oder alle der Funktionselemente umfasst sind, die im Betriebszustand ein einem oder mehreren der Kompostierungskanal-Container angeordnet sind.

Auf diese Weise ist am Betriebsort, abgesehen gegebenenfalls von Versorgungsleitungen, keine nennenswerte Infrastruktur und insbesondere keine Investitionen erforderlich, die über den Platz zur Aufstellung der modulare Kompostierungs-Anlage hinausgehen. Ferner ist ein Vorteil, dass die Kompostierungskanal-Container äußerst einfach und kostengünstig ausgestaltet sein können, vorzugsweise als einfache Standard-ISO-Container, bei denen vorzugsweise eine oder beide Seitenwände an den Stirnseiten modularen Kompostierungs-Anlage entfernt werden können. Die Kompostierungskanal-Container umfassen vorzugsweise keine oder zumindest deutlich weniger Funktionselemente als der Kompostierungs-Container. Diese Kompostierungskanal-Container können daher deutlich kostengünstiger hergestellt werden als etwa der Kompostierungs-Container. Einfache Standard-ISO-Container können oft auch einfach am Aufstellort der modularen Kompostierungs-Anlage bezogen werden. Der Kompostierungs-Container hingegen enthält vorzugsweise die erforderlichen Funktionselemente und kann einfach transportiert werden, um dann vor Ort mit den Kompostierungskanal-Containern zusammen zur modularen Kompostierungs-Anlage zusammengesetzt zu werden.

Gemäß einem weiteren Aspekt der Erfindung wird die eingangs genannte Aufgabe gelöst durch ein Kompostierungsverfahren nach Anspruch 14.

Das erfindungsgemäße Kompostierungsverfahren und seine bevorzugten Fortbildungen weisen Merkmale bzw. Verfahrensschritte auf, die sie insbesondere dafür geeignet machen, für bzw. mit einem erfindungsgemäßen transportablen Kompostierungs-Container und/oder für bzw. mit einer erfindungsgemäßen modularen Kompostierungs-Anlage und deren jeweiligen Fortbildungen verwendet zu werden.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Eine bevorzugte Ausführungsform der Erfindung wird beispielhaft anhand der beiliegenden Figuren beschrieben. Es zeigen:
- Figur 1:: eine dreidimensionale Ansicht einer beispielhaften modularen Kompostierungs-Anlage mit einem transportablen Kompostierungs-Container und zwei transportablen Kompostierungskanal-Containern;
- Figur 2:: einen Längsschnitt der modularen Kompostierungs-Anlage gemäß Figur 1;
- Figur 3:: einen Querschnitt der modularen Kompostierungs-Anlage gemäß Figur 1;
- Figur 4:: eine dreidimensionale Ansicht der Auflockerungsvorrichtung der modularen Kompostierungs-Anlage gemäß Figur 1;
- Figur 5:: eine Seitenansicht der Auflockerungsvorrichtung der modularen Kompostierungs-Anlage gemäß Figur 1;
- Figur 6:: eine dreidimensionale Ansicht einer weiteren beispielhaften modularen Kompostierungs-Anlage mit einem transportablen Kompostierungs-Container;
- Figur 7:: eine erste Seitenansicht der modularen Kompostierungs-Anlage nach Figur 6;
- Figur 8:: eine zweite Seitenansicht der modularen Kompostierungs-Anlage nach Figur 6; und
- Figur 9:: eine dreidimensionale Ansicht einer beispielhaften Messlanze.

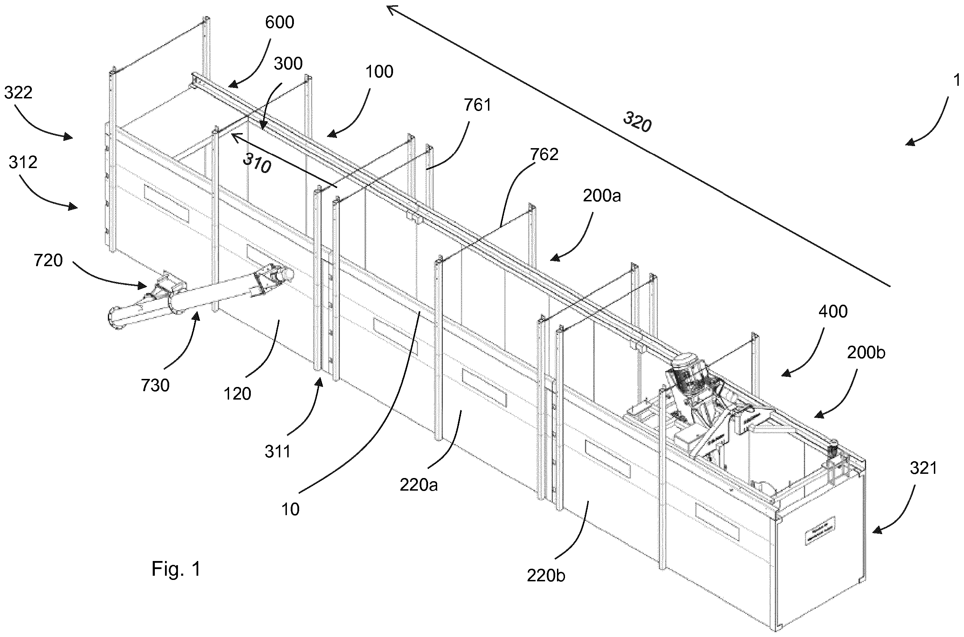

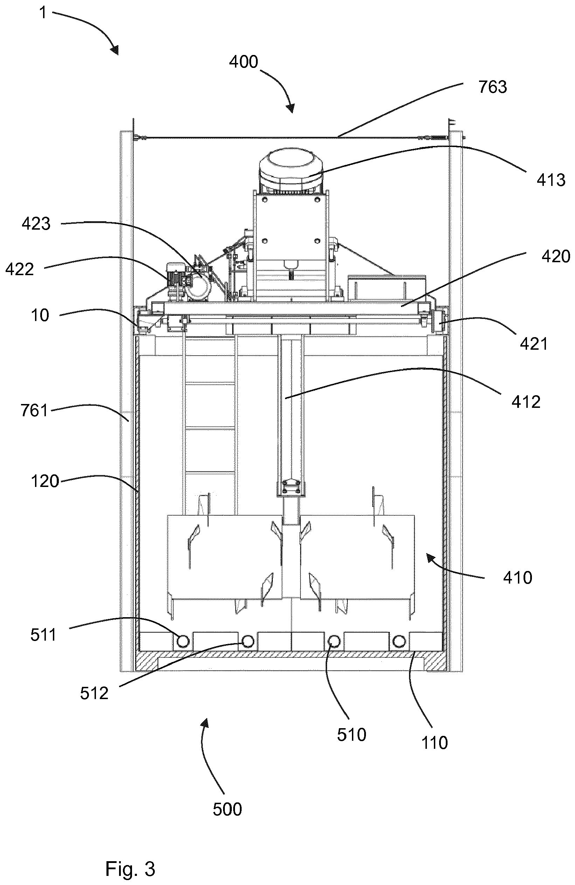

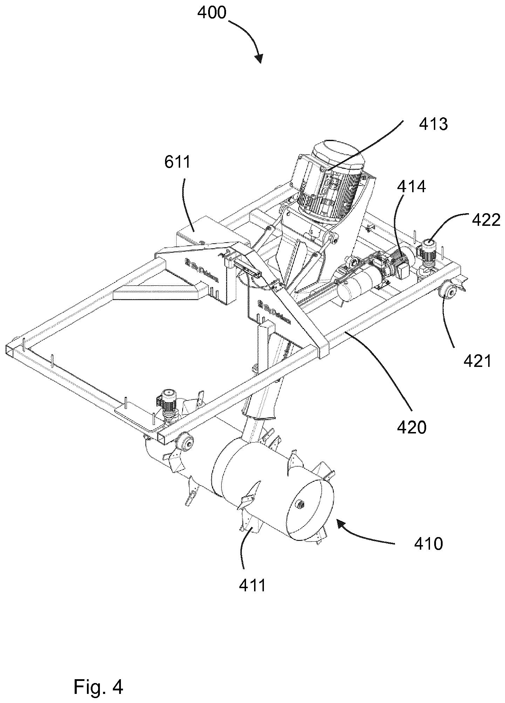

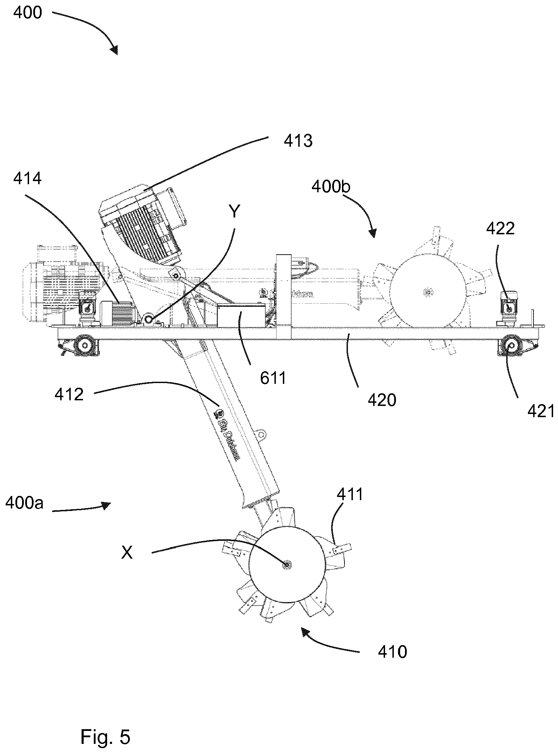

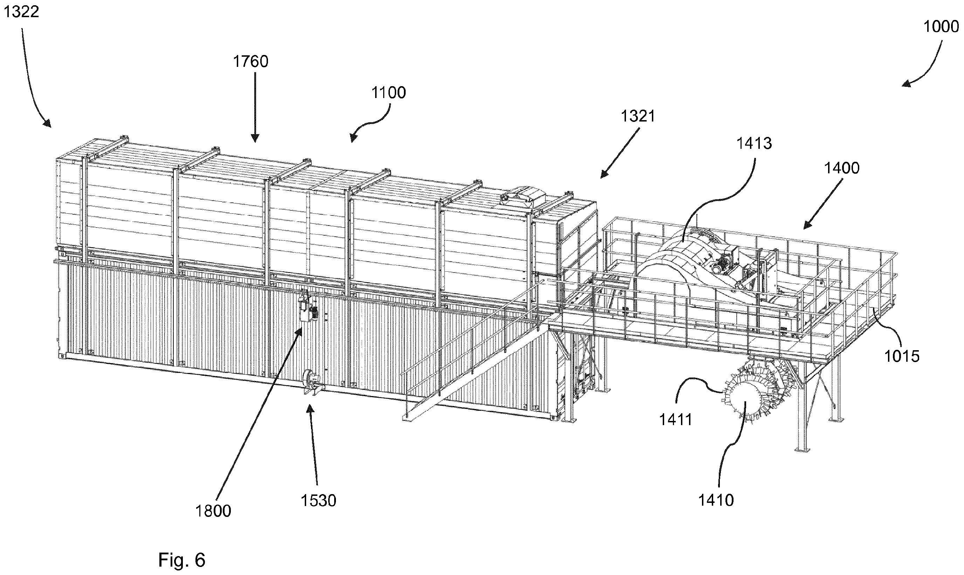

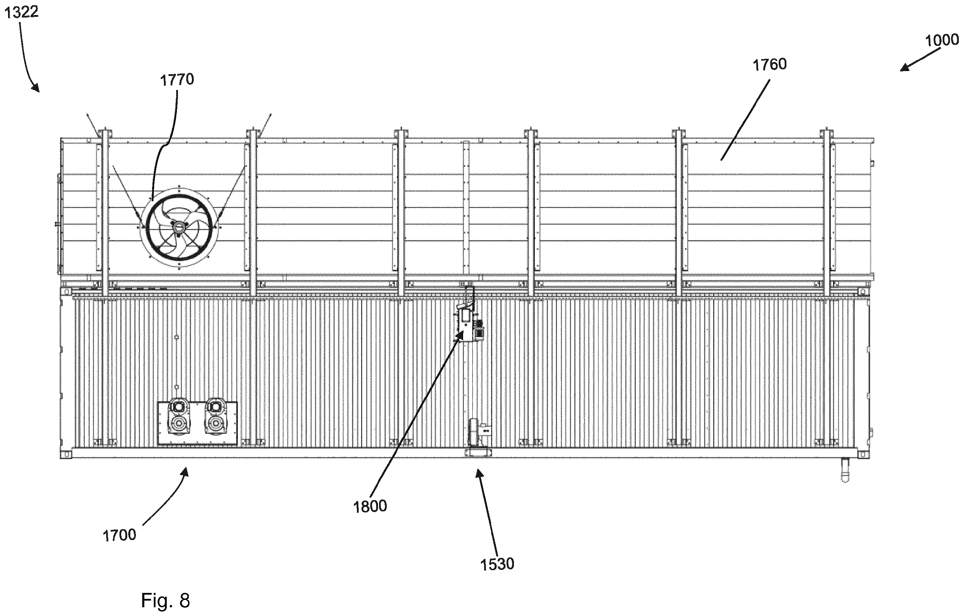

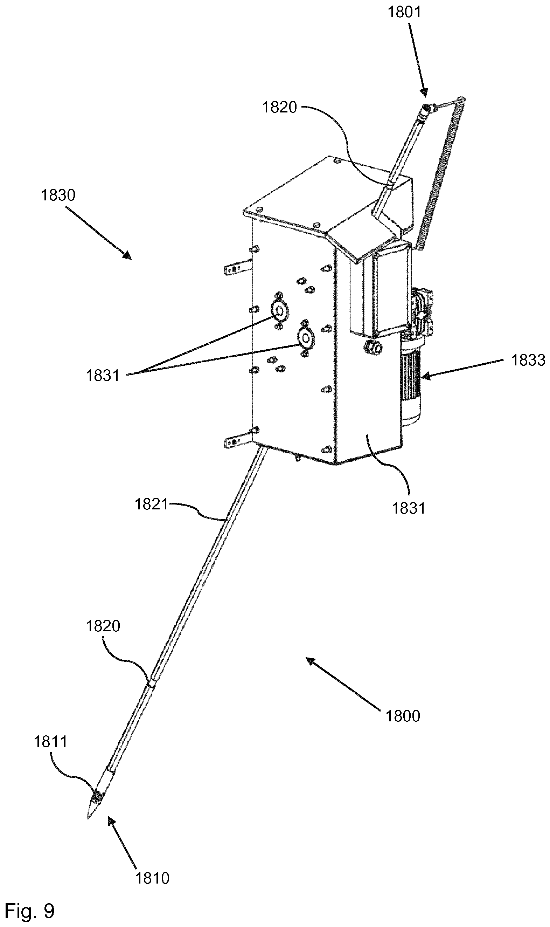

Die Figuren 1 bis 3 zeigen beispielhafte modulare Kompostierungs-Anlage 1 mit einem transportablen Kompostierungs-Container 100 und zwei transportablen Kompostierungskanal-Containern 200a, b. Die Figuren 4 und 5 zeigen die Auflockerungsvorrichtung 400 des transportablen Kompostierungs-Containers 100 im Detail. Die Figuren 6-8 zeigen eine weitere beispielhafte modulare Kompostierungs-Anlage 1000 und die Figur 9 eine Messlanze 1800 im Detail.

Gleiche oder im Wesentlichen funktionsgleiche Elemente sind in den Figuren mit den gleichen Bezugszeichen versehen. Mit Bezug auf die Figuren 6 bis 9 gelten im Wesentlichen die gleichen Funktionen und/oder Eigenschaften und/oder Vorteile, die mit Bezug auf die Figuren 1 bis 5 beschrieben, sofern nicht anders angegeben. Insbesondere kann es bevorzugt sein, einzelne Merkmale der Ausführungsformen mit einzelnen oder mehreren Merkmalen von anderen Ausführungsformen zu kombinieren.

Die modulare Kompostierungs-Anlage 1 umfasst einen transportablen Kompostierungs-Container 100 und zwei transportable Kompostierungskanal-Container 200a, b, kann jedoch mehr oder weniger transportable Kompostierungskanal-Container 200a, b aufweisen.

Der transportable Kompostierungs-Container 100 umfasst einen Kompostierungskanal 300 mit einer im Wesentlichen horizontal ausgerichteten Kompostierungsstrecke 310. Der Kompostierungs-Container 100 und die beiden Kompostierungskanal-Container 200a, b sind mit ihren Stirnseiten verbunden wobei die Seitenwände aneinander grenzender Stirnwände entfernt bzw. geöffnet sind. Auf diese Weise hat die modulare Kompostierungs-Anlage 1 eine im Wesentlichen horizontal ausgerichteten Gesamt-Kompostierungsstrecke 320. über die kombinierte Länge der drei Container. Der Kompostierungs-Container 100 und die beiden Kompostierungskanal-Container 200a, b sind als genormte ISO-Container im 20-Fuß-Maß ausgebildet.

Das Eintragsende 321 der modularen Kompostierungs-Anlage 1 ist am Kompostierungskanal-Container 200b ausgebildet und das Austragsende 322 der modularen Kompostierungs-Anlage 1 ist am Kompostierungs-Container 100 angeordnet und fällt mit dem Austragsende 312 des Kompostierungs-Containers 100 zusammen. Beispielsweise kann es auch bevorzugt sein, dass anstelle des einfachen Kompostierungskanal-Containers 200b ein Funktions-Container vorgesehen ist und dieser am Eintragsende beispielsweise eine Eintragsfördervorrichtung zum Eintragen von Kompostmaterial aufweist. In der hier dargestellten modularen Kompostierungs-Anlage 1 dient das Eintragsende 311 des Kompostierungs-Containers 100 nicht als Eintragsende der gesamten modularen Kompostierungs-Anlage 1, sondern ist durch die Verbindung mit dem Kompostierungskanal-Container 200a als offene Stirnseite ausgebildet, durch die Kompostmaterial vom Kompostierungskanal-Container 200a in den Kompostierungs-Container 100 gelangt.

Der transportable Kompostierungs-Container 100 weist eine Austragsöffnung 710 auf. Diese ist am Austragsende 312, 322 angeordnet. Die Austragsöffnung 710 ist im Boden des Kompostierungs-Containers angeordnet und als im Querschnitt etwa trichterförmig gestalteter Schlitz über den Großteil der Breite des Kompostierungs-Containers 100 ausgebildet. Auf diese Weise kann das Kompostmaterial allein oder unterstützt durch Schwerkrafteinfluss aus der Austragsöffnung 710 austreten. Die Austragsöffnung 710 kann verschließbar ausgebildet sein. Die Austragsöffnung 710 erstreckt sich quer zur Kompostierungsstrecke 310, 320.

Am Austragsende 312, 322 ist eine als Förderschnecke 720 ausgebildete Austragsvorrichtung angeordnet. Die Austragsvorrichtung befindet sich unterhalb der Austragsöffnung 710.

In einer bevorzugten Ausführungsform umfasst der transportable Kompostierungs-Container eine als Schrägförderschnecke 730 ausgebildete Fördervorrichtung, die mit der Austragsvorrichtung ausgetragenes Kompostmaterial nach oben weiterfördert. Von da aus kann das ausgetragene Kompostmaterial verladen oder auf eine weitere Fördervorrichtung übertragen werden.

Der transportable Kompostierungs-Container 100 umfasst ferner eine Auflockerungsvorrichtung 400, die in den Figuren 4 und 5 im Detail dargestellt ist. Die Auflockerungsvorrichtung 400 ist entlang der Kompostierungsstrecke 310, 320 bewegbar und somit oberhalb eines Bodens 110 des Kompostierungs-Containers bzw. oberhalb eines Bodens 210a, b der Kompostierungskanal-Container 200a, b angeordnet. Die Auflockerungsvorrichtung 400 weist einen Tragrahmen 420 mit über Antriebsvorrichtungen 422 angetriebenen Rollen 421 auf, mit denen sie an und/oder auf gegenüberliegenden, parallel zur Kompostierungsstrecke verlaufenden Seitenwänden 120, 220a, b beweglich geführt ist, insbesondere an Führungsschienen 10, die am oberen Ende der verlaufenden Seitenwände 120, 220a, b angeordnet sind.

Ferner ist eine Belüftungsvorrichtung 500 vorgesehen. Die Belüftungsvorrichtung 500 umfasst mehrere Rohre 510 mit Belüftungsöffnungen 511. Die Belüftungsöffnungen 511 und/oder das Rohr 510 sind mit einer luftdurchlässigen Abdeckung 512 versehen. Die Rohre 510 der Belüftungsvorrichtung 500 verlaufen sowohl durch den Kompostierungs-Container 100 also auch durch die beiden Kompostierungskanal-Container 200a, b. Vorzugsweise befindet sich im Transportzustand die Belüftungsvorrichtung 500 für die gesamte modulare Kompostierungs-Anlage 1 im Kompostierungs-Container 100. Ein Kompressor 530 sowie wie Anschlüsse 520, über die der Kompressor 530 mit den Rohren 510 verbunden ist, um Druckluft in die Rohre 510 und von dort über die Belüftungsöffnungen 511 in das Kompostmaterial bereitzustellen, sind vorzugsweise nur am Kompostierungs-Container 100 vorgesehen.

Die Auflockerungsvorrichtung 400 umfasst eine um eine Drehachse X drehbar angeordnete und mit Zähnen 411 versehene Walze 410. Die Walze 410 ist über einen Schwenkarm 412 mit dem Tragrahmen 420 verbunden. Die Drehachse X ist im Wesentlichen horizontal und im Wesentlichen orthogonal zur Kompostierungsstrecke 310, 320 ausgerichtet. Ferner ist die Auflockerungsvorrichtung 400 um eine im Wesentlichen horizontal ausgerichtete Schwenkachse Y schwenkbar gelagert. Die Schwenkachse Y ist ebenfalls im Wesentlichen orthogonal zur Kompostierungsstrecke 310, 320 ausgerichtet. An dem der Walze 410 abgewandten Ende des Schwenkarms 412 ist eine elektrische Antriebsvorrichtung 413 angeordnet, über die die Walze 410 in Rotation um die Drehachse X versetzt werden kann.

Die Auflockerungsvorrichtung 400 ist in den Zeichnungen 1 bis 4 in einer Betriebsposition dargestellt. In Figur 5 ist diese Betriebsposition mit 400a bezeichnet und eine gestrichelt dargestellte Position 400b zeigt die Ruheposition. Die Auflockerungsvorrichtung 400 kann durch Verschwenken des Schwenkarms 412 mittels der Antriebseinheit 414 von der Betriebsposition 400a in die Ruheposition 400b und umgekehrt bewegt werden. Eine Steuerungseinheit 611 ist am Tragrahmen 420 vorgesehen, die Steuerungssignale von einer Steuerungsvorrichtung 610 empfangen und umsetzen kann.

Ferner ist mindestens ein Sensor 630 vorgesehen zur Ermittlung von einem oder mehreren Kompostierungsparametern, insbesondere Temperatur und/oder Feuchtigkeit und/oder pH-Wert.

Auch eine Bewässerungsvorrichtung 750 zum Eintragen von Flüssigkeit, insbesondere Wasser, in das Kompostmaterial ist vorgesehen. Diese kann vorzugsweise über eine Leitung mit einem Flüssigkeitsreservoir verbunden sein und über eine Fördervorrichtung Flüssigkeit aus dem Reservoir in oder auf das Kompostmaterial fördern.

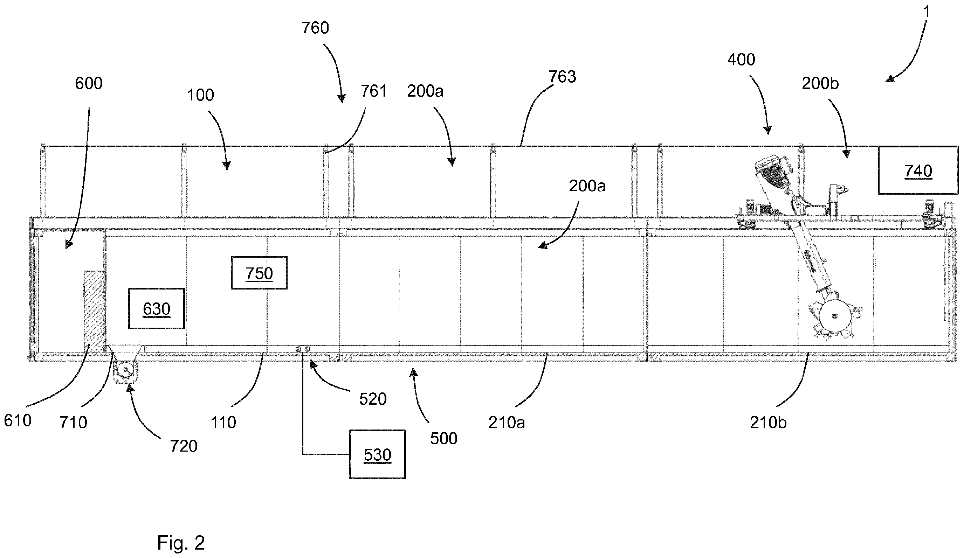

Der transportable Kompostierungs-Container 100 und zwei transportable Kompostierungskanal-Container200a, b weisen zudem eine Dachabdeckung 760 auf. Die Dachabdeckung umfasst eine Hülle 763 (nur in Figur 2 angedeutet), die an seitlichen Stützen 761 und Querstreben 762 angeordnet ist. Vorzugsweise umschließt die Dachabdeckung 760 einen Raum oberhalb der Seitenwände 120, 220a, b fluiddicht oder im Wesentlichen fluiddicht, wobei eine Zuluftöffnung und/oder eine Abluftöffnung vorgesehen sein kann. Auf diese Weise kann das Austreten von Luft, insbesondere Ammoniakhaltiger Luft, verhindert und/oder kontrolliert werden.

Vorzugsweise ist eine Luftreinigungseinheit 740 vorgesehen, die insbesondere ausgebildet ist, den Ammoniakgehalt von Luft zu reduzieren, bevor diese aus der Kompostierungs-Anlage 1 austritt.

Der Kompostierungs-Container 100 weist ferner eine Steuerungsvorrichtung 610 auf, die ausgebildet ist, die Auflockerungsvorrichtung 400 und die Belüftungsvorrichtung 500 zu steuern. Die Steuerungsvorrichtung 610 ist ferner ausgebildet, die Auflockerungsvorrichtung 400 und/oder die Belüftungsvorrichtung 500 und/oder die Austragvorrichtung 720 und/oder die Bewässerungsvorrichtung 750 und/oder die Luftreinigungseinheit 740 in Abhängigkeit von dem einen oder mehreren Kompostierungsparametern zu steuern. Die Steuerungsvorrichtung 610 ist an einer Stirnseite des Kompostierungs-Containers 100 in einem abgetrennten, durch stirnseitig Zugangstüren 620 zugänglichen Steuerungsraum 600 angeordnet. Der Steuerungsraum 600 ist vorzugsweise gegenüber dem Kompostierungskanal abgedichtet, sodass kein Kompostmaterial, insbesondere keine Flüssigkeit und/oder Feuchtigkeit, in den Steuerungsraum 600 gelangen kann. Die insbesondere in Figur 2 zu erkennende Anordnung des Steuerungsraums 600 zeigt, dass der Steuerungsraum 600 nicht nur im Transportzustand, sondern auch im Betriebszustand vollständig innerhalb des Kompostierungs-Containers 100 angeordnet ist.

Im Transportzustand des Kompostierungs-Containers sind die Auflockerungsvorrichtung und die Belüftungsvorrichtung vollständig innerhalb des Kompostierungs-Containers angeordnet. Besonders bevorzugt ist, dass möglichst viele, wenn nicht alle Funktionselemente der modularen Kompostierungs-Anlage 1 im Transportzustand vollständig innerhalb des Kompostierungs-Containers 100 angeordnet sind. Als Fusionselemente werden hier insbesondere die Auflockerungsvorrichtung 400, die Belüftungsvorrichtung 500, die Steuerungsvorrichtung 610, die Austragsvorrichtung 720, die Dachabdeckung 760, die Bewässerungsvorrichtung 750 und die Luftreinigungseinheit 740 verstanden.

Der Kompostierungs-Container 100 und die Kompostierungskanal-Container 200a, b sind genormte Container. Im Transportzustand entsprechen sie den Maßen eines genormten Containers. Im Betriebszustand können Bestandteile auch außen am Kompostierungs-Container und/oder Kompostierungskanal-Container angeordnet sein. In den Figuren 1-3 sind der Kompostierungs-Container 100 und die Kompostierungskanal-Container 200a, b im Betriebszustand gezeigt, was beispielsweise daran zu erkennen ist, dass die Auflockerungsvorrichtung 400, die als Förderschnecke 720 ausgebildete Austragsvorrichtung und die Dachabdeckung 760 außerhalb des Kompostierungs-Container 100 angeordnet sind bzw. über diesen hinausragen.

Mit der modularen Kompostierungs-Anlage 1 ist folgendes Kompostierungsverfahren möglich. Zunächst wird ein transportabler Kompostierungs-Container 100 bereitgestellt, ggf. ein, zwei oder weitere Kompostierungskanal-Container 200a, b. In das Eintragsende 311, 321 wird Kompostmaterial eintragen, z.B. per Hand, über eine Fördervorrichtung oder mit einer Lade- und/oder Transportmaschine, wie Radlader, Bagger o.ä. Das Kompostmaterial wird dann während einer Kompostierungsdauer durch die Auflockerungsvorrichtung 400 wiederholt, aber durch Pausen unterbrochen, aufgelockert und bewegt. Insbesondere wird eine Bewegung des Kompostmaterials vom Eintragsende 311, 321 zum Austragsende 312, 322 hin durch eine entsprechende Bewegung der Auflockerungsvorrichtung 400 entlang der Kompostierungsstrecke 310, 320 in der Betriebsposition 400a verursacht. Schließlich, wenn das Kompostmaterial eine gewünschte Kompostreife erreicht hat, wird das Kompostmaterial aus dem Austragsende 312, 322 ausgetragen.

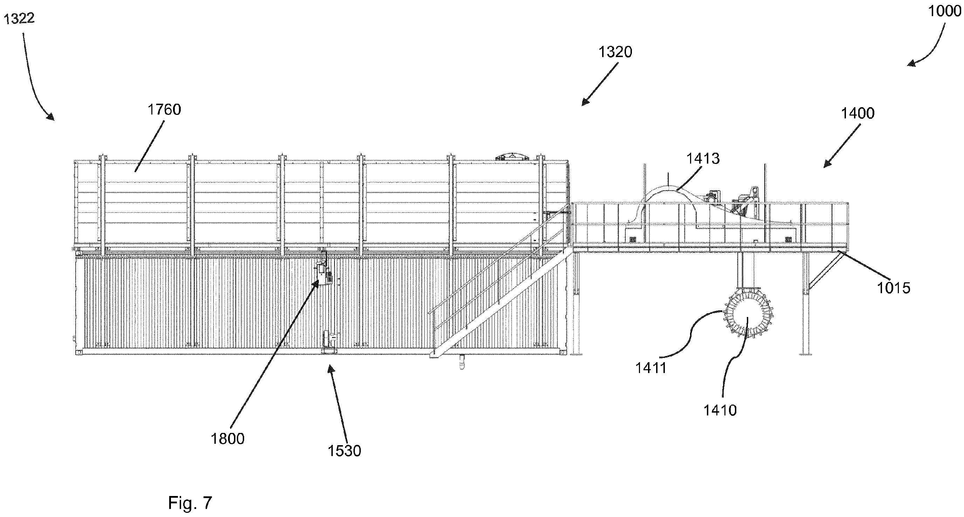

Die in den Figuren 6-8 dargestellte modulare Kompostierung-Anlage 1000 umfasst einen transportablen Kompostierung-Container 1100 mit einem darin gebildeten Kompostierungskanal und einer im Wesentlichen horizontal ausgerichteten Kompostierungsstrecke. Am Eintragsende 1321 schließt sich eine Parkposition für die Auflockerungsvorrichtung 1400 an. In der in den Figuren 6 und 7 dargestellten Parkposition der Auflockerungsvorrichtung 1400 ist die mit Zähnen 1411 versehene Walze 1410 an ihrem Schwenkarm 1412 nach unten verschwenkt. In der in den Figuren 6 und 7 gezeigten Ruheposition befindet sich die Walze 1410 jedoch nicht im Kompostmaterial, sondern ist von Personal zugänglich, insbesondere zu Reinigung- und/oder Wartungszwecken. Hierzu ist auch ein Gerüst 1015 vorgesehen, über das Personal die Auflockerungsvorrichtung 1400 erreichen kann, insbesondere auch die Ruhehaube 1413.

Die Belüftung erfolgt in dem Ausführungsbeispiel der Figuren 6 bis 9 vorzugsweise über einen doppelten Boden, wozu seitlich am Kompostierung-Container 1100 Kompressoren 1530 angebracht sind, welche Außenluft in den Zwischenraum des doppelten Bodens fördern, von wo aus die Luft durch Bodenöffnungen im oberen Boden des doppelten Bodens zum Kompostmaterial gelangt. Vorzugsweise erfolgt auch die Entwässerung von Flüssigkeiten, die während der Kompostierung anfallen, durch den doppelten Boden hinweg und wird über eine Entwässerungsöffnung nach außen geführt, an die sich ein Siphon anschließt, der einen Gasaustritt verhindert.

Am Austragsende 1322 ist eine Austragsvorrichtung 1700 angeordnet, aus der das Kompostmaterial austreten kann, und die beispielsweise als Förderschnecke ausgebildet ist. Über einer Förderschnecke sind vorzugsweise zwei langsam drehende Reißwalzen angeordnet, die durch ihre Drehung das Kompostmaterial der Förderschnecke zuführen.

Der transportable Kompostierung-Container 1100 weist zudem eine Dachabdeckung 1760 auf mit einem Abluftschacht 1770, aus dem, vorzugsweise gereinigte, Abluft abgeführt werden kann.

In den Figuren 6 bis 8 ist ferner eine Messlanze 1800 gezeigt, die in Figur 9 im Detail dargestellt ist. Die Messlanze 1800 wird über eine Außenseite des Kompostierung-Containers 1100 in das Kompostmaterial eingeführt. Das, vorzugsweise automatisierte, Einführen der Messlanze erfolgt über eine Anordnung 1830 mit Reibrädern 1831 an einer Seitenwand des Kompostierung-Containers 1100. Die Reibräder 1831 sind vorzugsweise von einem Antrieb 1833 angetrieben. Die Anordnung 1830 ist durch ein Gehäuse 1831 geschützt.

Ein Ende 1801 der Messlanze 1800 verbleibt vorzugweise stets außerhalb des Kompostierung-Containers 1100. Das Einführen und/oder Ausführen der Messlanze 1800 erfolgt vorzugsweise über eine Steuerungsvorrichtung des Kompostierung-Containers 1100. Die Messlanze 1800 weist einen Eintrittswinkel von etwa 60° in Bezug auf die Seitenwand des Kompostierung-Containers 1100 auf, wobei die Eintrittsrichtung von oben nach unten verläuft.

An der Messlanze 1800 ist eine Messspitze 1810 vorgesehen mit Ausnehmungen 1811, über die Lanzensensoren mit dem Kompostmaterial und/oder den Bedingungen im Kompost in Verbindung gebracht werden können, wobei die Lanzensensoren aber gleichzeitig durch die Messspitze 1810 geschützt sind. Die Messlanze 1800 weist Markierungen in Form einer Querschnittsreduktion 1820 auf, um die Eindringtiefe und/oder den ein- und/oder ausgefahrenen Zustand der Messlanze 1800 erkennen zu können.

Ferner weist die Messlanze 1800 eine längsverlaufende Nut 1821 auf, die ausgebildet ist ein Führungsmittel einzuführen, um eine Verdrehung der Messlanze 1800 und/oder von deren Ende 1801 zu verhindern oder zu verringern.

## Patentansprüche

1. Modulare Kompostierungs-Anlage (1, 1000) umfassend einen transportablen Kompostierungs-Container (100, 1100), umfassend
- einen Kompostierungskanal (300) mit einer im Wesentlichen horizontal ausgerichteten Kompostierungsstrecke (310) von einem Eintragsende zu einem Austragsende,
- eine Auflockerungsvorrichtung (400), die oberhalb eines Bodens des Kompostierungs-Containers (100, 1100) angeordnet und entlang der Kompostierungsstrecke bewegbar ist,
- eine Belüftungsvorrichtung (500) mit einer Vielzahl von Belüftungsöffnungen (511) zum Einbringen von Gas, insbesondere Luft, in im Kompostierungs-Container (100, 1100) befindliches Kompostmaterial,
- eine Steuerungsvorrichtung (610), die ausgebildet ist, die Auflockerungsvorrichtung (400) und die Belüftungsvorrichtung (500) zu steuern,
wobei die modulare Kompostierungs-Anlage ferner einen transportablen Kompostierungskanal-Container (200a, b) und/oder Funktions-Container umfasst, der mit dem Kompostierungs-Container (100, 1100) verbunden ist bzw. sind, so dass sich eine im Wesentlichen horizontal ausgerichtete Gesamt-Kompostierungsstrecke (320) über den Kompostierungs-Container (100, 1100) und den Kompostierungskanal-Container (200a, b) und/oder den Funktions-Container erstreckt,
**dadurch gekennzeichnet, dass** die Auflockerungsvorrichtung (400, 1400) in eine Parkposition bringbar ist, wobei die Parkposition außerhalb des Kompostierungskanals (300) und/oder außerhalb der Kompostierungsstrecke angeordnet ist.

2. Modulare Kompostierungs-Anlage (1, 1000) nach mindestens einem der vorhergehenden Ansprüche,
**dadurch gekennzeichnet, dass** in einem Transportzustand des Kompostierungs-Containers (100, 1100) die Auflockerungsvorrichtung (400) und die Belüftungsvorrichtung (500) vollständig innerhalb des Kompostierungs-Containers (100, 1100) angeordnet sind.

3. Modulare Kompostierungs-Anlage (1, 1000) nach mindestens einem der vorhergehenden Ansprüche,
umfassend eine am Austragsende angeordnete Austragsvorrichtung (1700), die vorzugsweise als Förderschnecke (720) ausgebildet und/oder unterhalb einer Austragsöffnung (710) im Boden (110) des Kompostierungs-Container (100, 1100) angeordnet ist.

4. Modulare Kompostierungs-Anlage (1, 1000) nach mindestens einem der vorhergehenden Ansprüche,
- **dadurch gekennzeichnet, dass** die Auflockerungsvorrichtung (400, 1400) eine um eine Drehachse (X) drehbar angeordnete und mit Zähnen (411, 1411) versehene Walze (410, 1410) umfasst, wobei die Drehachse (X) im Wesentlichen horizontal und im Wesentlichen orthogonal zur Kompostierungsstrecke ausgerichtet ist,
und/oder
- **dadurch gekennzeichnet, dass** die Auflockerungsvorrichtung (400, 1400) um eine im Wesentlichen horizontal ausgerichtete Schwenkachse (Y) schwenkbar gelagert ist,
und/oder
- **dadurch gekennzeichnet, dass** die Auflockerungsvorrichtung (400, 1400) an und/oder auf gegenüberliegenden, parallel zur Kompostierungsstrecke verlaufenden Seitenwänden (120, 220a, b) beweglich geführt ist.

5. Modulare Kompostierungs-Anlage (1, 1000) nach mindestens einem der vorhergehenden Ansprüche,
- **dadurch gekennzeichnet, dass** die Auflockerungsvorrichtung (400, 1400) von einer Betriebsposition (400a) in eine Ruheposition (400b) bringbar ist, wobei vorzugsweise die Walze der Auflockerungsvorrichtung (400, 1400) in der Betriebsposition (400a) so angeordnet ist, dass sie sich im Kompostmaterial, vorzugsweise einem unteren, bodennahen Bereich des Kompostmaterials, befindet, und wobei vorzugweise die Walze der Auflockerungsvorrichtung (400, 1400) in der Ruheposition (400b) so angeordnet ist, dass sie sich oberhalb des Kompostmaterials befindet,
und/oder
- **dadurch gekennzeichnet, dass** die Auflockerungsvorrichtung (400, 1400) von der Ruheposition (400b) aus in die Parkposition bringbar ist, und vorzugsweise auch von der Parkposition wieder in die Ruheposition (400b), vorzugsweise durch Verschwenken um die Schwenkachse (Y), wobei die Parkposition ansonsten aber vorzugsweise der Betriebsposition (400a) entspricht.

6. Modulare Kompostierungs-Anlage (1, 1000) nach mindestens einem der vorhergehenden Ansprüche,
**dadurch gekennzeichnet, dass** die Belüftungsvorrichtung (500) mindestens ein Rohr (510) mit Belüftungsöffnungen (511) umfasst, wobei die Belüftungsöffnungen (511) und/oder das Rohr (510) mit einer luftdurchlässigen Abdeckung versehen sind,
und/oder
**dadurch gekennzeichnet, dass** die Belüftungsvorrichtung (500) einen Kompressor umfasst, der ausgebildet ist, Volumenstrom bereitzustellen, vorzugsweise in das mindestens eine Rohr (510).

7. Modulare Kompostierungs-Anlage (1, 1000) nach mindestens einem der vorhergehenden Ansprüche,
umfassend einen oder mehrere Sensoren (630) zur Ermittlung von einem oder mehreren Kompostierungsparametern, insbesondere Temperatur und/oder Feuchtigkeit und/oder pH-Wert und/oder Sauerstoffgehalt, und/oder eine oder mehrere Messlanzen (1800) zur Ermittlung von einem oder mehreren Kompostierungsparametern, insbesondere Temperatur und/oder Feuchtigkeit und/oder pH-Wert und/oder Sauerstoffgehalt, wobei vorzugsweise die Steuerungsvorrichtung (610) ausgebildet ist, die Messlanze (1800) so zu steuern, dass die Messlanze (1800) eingeführt im Kompostmaterial verbleibt und nur dann aus dem Kompostmaterial, insbesondere mit Hilfe einer Anordnung mit Reibrädern, herausgeführt wird, wenn die Auflockerungsvorrichtung (400, 1400) das Kompostmaterial umwirft.

8. Modulare Kompostierungs-Anlage (1, 1000) nach mindestens einem der vorhergehenden Ansprüche,
- umfassend eine Bewässerungsvorrichtung (750) und/oder eine Dachabdeckung (760, 1760) und/oder eine Luftreinigungseinheit (740) oder einen Abluftschacht, wobei vorzugsweise die Dachabdeckung (760, 1760) einen Raum oberhalb der Seitenwände (120, 220a, b) des Kompostierungs-Containers (100, 1100), vorzugsweise fluiddicht oder im Wesentlichen fluiddicht, insbesondere luftdicht oder im Wesentlichen luftdicht, umschließt, und/oder wobei die Luftreinigungseinheit insbesondere ausgebildet ist, einen Ammoniakgehalt von Luft zu reduzieren, und wobei vorzugsweise der Abluftschacht sich an eine weitestgehend luftdichte Dachabdeckung (760, 1760) anschließt.

9. Modulare Kompostierungs-Anlage (1, 1000) nach mindestens einem der vorhergehenden Ansprüche,
**dadurch gekennzeichnet, dass** die Steuerungsvorrichtung (610) ausgebildet ist, die Auflockerungsvorrichtung (400, 1400) und/oder die Belüftungsvorrichtung (500) und/oder die Austragvorrichtung (720) und/oder die Bewässerungsvorrichtung (750) und/oder die Luftreinigungseinheit (740) in Abhängigkeit von dem einen oder mehreren Kompostierungsparametern zu steuern.

10. Modulare Kompostierungs-Anlage (1, 1000) nach mindestens einem der vorhergehenden Ansprüche,
**dadurch gekennzeichnet, dass** am Eintragsende der Kompostierungsstrecke eine Tür angeordnet ist, die in geöffnetem Zustand ausgebildet ist, die Auflockerungsvorrichtung (400, 1400), vorzugsweise in deren Ruheposition (400b), in den Kompostierungskanal (300) eintreten zu lassen und/oder aus dem Kompostierungskanal (300) austreten zu lassen, wobei die Tür vorzugsweise an einer Dachabdeckung (760, 1760) angeordnet ist, insbesondere an deren Stirnseite am Eintragsende.

11. Modulare Kompostierungs-Anlage (1, 1000) nach mindestens einem der vorhergehenden Ansprüche,
**dadurch gekennzeichnet, dass** der Kompostierungs-Container (100, 1100) und der Funktions-Container an den beiden stirnseitigen Enden der modularen Kompostierungs-Anlage (1, 1000) angeordnet sind und das Eintragsende und das Austragsende der Kompostierungsstrecke bilden bzw. umfassen,
und/oder
**dadurch gekennzeichnet, dass** der Funktions-Container weitere Funktionselemente umfasst, vorzugsweise eine Austragsvorrichtung (1700) und/oder eine Austragsöffnung (710) und/oder eine Inspektionsplattform und/oder eine Eintragsvorrichtung, beispielsweise eine Fördervorrichtung, etwa eine Förderschnecke, ein Förderband oder eine Materialrutsche.

12. Modulare Kompostierungs-Anlage nach mindestens einem der vorhergehenden Ansprüche, umfassend zwei, drei oder mehrere transportable Kompostierungskanal-Container (200a, b).

13. Modulare Kompostierungs-Anlage (1, 1000) nach mindestens einem der vorhergehenden Ansprüche, wobei der mindestens eine Kompostierungs-Container (100, 1100) und der mindestens eine Kompostierungskanal-Container (200a, b) und/oder der mindestens eine Funktions-Container mit ihren Stirnseiten verbunden ist bzw. sind, wobei vorzugsweise die Seitenwände (120, 220a, b) aneinander grenzender Stirnwände entfernt bzw. geöffnet sind.

14. Kompostierungsverfahren,
umfassend:
- Bereitstellen einer modularen Kompostierungs-Anlage (1, 1000) nach mindestens einem der vorhergehenden Ansprüche,
- Eintragen von Kompostmaterial in das Eintragsende,
- während einer Kompostierungsdauer, Auflockern und Bewegen des Kompostmaterials vom Eintragsende zum Austragsende durch die Auflockerungsvorrichtung (400, 1400),
- Bringen der Auflockerungsvorrichtung (400, 1400) in eine Parkposition, wobei die Parkposition außerhalb des Kompostierungskanals (300) und/oder außerhalb der Kompostierungsstrecke angeordnet ist,
- Austragen von Kompostmaterial aus dem Austragsende.

## Claims

1. A modular composting facility (1, 1000) comprising a transportable composting container (100, 1100), comprising
- a composting passage (300) with an essentially horizontally-orientated composting section (310) from an intake end to a discharge end,
- a loosening-up device (400), which is arranged above a floor of the composting container (100, 1100), and can be moved along the composting section,
- an aeration device (500) with a plurality of aeration openings (511) for the introduction of gas, in particular air, into the composting container (100, 1100),
- a control device (610), which is designed to control the loosening-up device (400) and the aeration device (500),
wherein the modular composting facility furthermore comprises a transportable composting passage container (200a, b), and/or a functional container, which is/are connected to the composting container (100, 1100), so that an essentially horizontally-orientated overall composting section (320) extends over the composting container (100, 1100) and the composting passage container (200a, b), and/or the functional container,
**characterised in that**, the loosening-up device (400, 1400) can be brought into a parking position, wherein the parking position is arranged outside the composting passage (300), and/or outside the composting section.

2. The modular composting facility (1, 1000) in accordance with at least one of the preceding claims,
**characterised in that**, in a transportation state of the composting container (100, 1100), the loosening-up device (400) and the aeration device (500) are arranged completely within the composting container (100, 1100).

3. The modular composting facility (1, 1000) in accordance with at least one of the preceding claims,
comprising a discharge device (1700) arranged at the discharge end, which is preferably designed as a screw conveyor (720), and/or is arranged below a discharge opening (710) in the floor (110) of the composting container (100, 1100).

4. The modular composting facility (1, 1000) according to at least one of the preceding claims,
- **characterised in that**, the loosening-up device (400, 1400) comprises a roller (410, 1410) arranged such that it can rotate about an axis of rotation (X), and fitted with teeth (411, 1411), wherein the axis of rotation (X) is essentially horizontal and essentially orthogonal to the composting section,
and/or
- **characterised in that**, the loosening-up device (400, 1400) is mounted such that it can pivot about an essentially horizontally-orientated pivot axis (Y),
and/or
- **characterised in that**, the loosening-up device (400, 1400) is guided such that it can move along, and/or on, opposing side walls (120, 220a, b) extending parallel to the composting section.

5. The modular composting facility (1, 1000) according to at least one of the preceding claims,
- **characterised in that**, the loosening-up device (400, 1400) can be brought from an operating position (400a) into a resting position (400b), wherein the roller of the loosening-up device (400, 1400) is preferably arranged in the operating position (400a) such that it is located in the compost material, preferably in a lower region of the compost material close to the floor, and wherein the roller of the loosening-up device (400, 1400) is preferably arranged in the resting position (400b) such that it is located above the compost material,
and/or
- **characterised in that**, the loosening-up device (400, 1400) can be brought from the resting position (400b) into the parking position, and preferably also from the parking position back into the resting position (400b), preferably by pivoting about the pivot axis (Y), wherein the parking position otherwise preferably corresponds to the operating position (400a).

6. The modular composting facility (1, 1000) according to at least one of the preceding claims,
**characterised in that**, the aeration device (500) comprises at least one pipe (510) with aeration openings (511), wherein the aeration openings (511), and/or the pipe (510), are provided with an air-permeable covering,
and/or
**characterised in that**, the aeration device (500) comprises a compressor, which is designed to provide a volumetric flow, preferably into the at least one pipe (510).

7. The modular composting facility (1, 1000) according to at least one of the preceding claims,
comprising one or a plurality of sensors (630) for the determination of one or a plurality of composting parameters, in particular temperature, and/or moisture, and/or pH value, and/or oxygen content, and/or, one or a plurality of measuring lances (1800) for the determination of one or a plurality of composting parameters, in particular temperature, and/or moisture, and/or pH value, and/or oxygen content, wherein the control device (610) is preferably designed to control the measuring lance (1800) such that the measuring lance (1800) remains inserted in the compost material and is only guided out of the compost material, in particular with the aid of an arrangement with friction wheels, when the loosening-up device (400, 1400) is turning over the compost material.

8. The modular composting facility (1, 1000) according to at least one of the preceding claims,
- comprising an irrigation device (750), and/or a roof covering (760, 1760), and/or an air purification unit (740), or an exhaust air shaft, wherein the roof covering (760, 1760) preferably encloses a space above the side walls (120, 220a, b) of the composting container (100, 1100), preferably in a manner impermeable to fluids, or essentially impermeable to fluids, in particular in an air-tight, or an essentially air-tight, manner, and/or wherein, the air purification unit is designed in particular to reduce the ammonia content of the air, and wherein the exhaust air shaft is preferably connected to a roof covering (760, 1760) that is as air-tight as possible.

9. The modular composting facility (1, 1000) according to at least one of the preceding claims,
**characterised in that**, the control device (610) is designed to control the loosening-up device (400, 1400), and/or the aeration device (500), and/or the discharge device (720), and/or the irrigation device (750), and/or the air purification unit (740) as functions of the one or a plurality of composting parameters.

10. The modular composting facility (1, 1000) according to at least one of the preceding claims,
**characterised in that**, a door is arranged at the intake end of the composting section, which door, in the open state, is designed to allow the loosening-up device (400, 1400), preferably in its resting position (400b), to enter the composting passage (300), and/or to exit the composting passage (300), wherein the door is preferably arranged on a roof covering (760, 1760), in particular on its end face at the intake end.

11. The modular composting facility (1, 1000) according to at least one of the preceding claims,
**characterised in that**, the composting container (100, 1100) and the functional container are arranged on the two front ends of the modular composting facility (1, 1000), and form or comprise the intake end and the discharge end of the composting section,
and/or
**characterised in that**, the functional container comprises further functional elements, preferably a discharge device (1700), and/or a discharge opening (710), and/or an inspection platform, and/or an intake device, for example a conveyor device, such as a screw conveyor, a conveyor belt, or a material chute.

12. The modular composting facility according to at least one of the preceding claims, comprising two, three, or a plurality of, transportable composting passage containers (200a, b).

13. The modular composting facility (1, 1000) according to at least one of the preceding claims, wherein the at least one composting container (100, 1100) and the at least one composting passage container (200a, b), and/or the at least one functional container is or are connected on their end faces, wherein the side walls (120, 220a, b) of adjoining end walls are preferably removed or opened.

14. A composting method, comprising:
- provision of a modular composting facility (1, 1000) according to at least one of the preceding claims,
- intake of compost material into the intake end,
- during a composting period, loosening-up and movement of the compost material from the intake end to the discharge end by the loosening-up device (400, 1400),
- bringing of the loosening-up device (400, 1400) into a parking position, wherein the parking position is arranged outside the composting passage (300), and/or outside the composting section,
- discharge of compost material from the discharge end.

## Revendications

1. Installation de compostage modulaire (1, 1000) comprenant un conteneur de compostage transportable (100, 1100), comprenant
- un canal de compostage (300) avec un tronçon de compostage (310) orienté de manière sensiblement horizontale d'une extrémité d'entrée à une extrémité de décharge,
- un dispositif de désagrégation (400), qui est disposé au-dessus d'un fond du conteneur de compostage (100, 1100) et peut être déplacé le long du tronçon de compostage,
- un dispositif d'aération (500) avec une pluralité d'ouvertures d'aération (511) destinées à introduire du gaz, en particulier de l'air, dans le matériau à composter se trouvant dans le conteneur de compostage (100, 1100),
- un dispositif de commande (610) qui est réalisé pour commander le dispositif de désagrégation (400) et le dispositif d'aération (500),
dans laquelle l'installation de compostage modulaire comprend en outre un conteneur de canal de compostage transportable (200a, b) et/ou un conteneur fonctionnel, qui est relié ou sont reliés au conteneur de compostage (100, 1100), de sorte qu'un tronçon de compostage global (320) orienté de manière sensiblement horizontale s'étend le long du conteneur de compostage (100, 1100) et du conteur de canal de compostage (200a, b) et/ou du conteneur fonctionnel,
**caractérisée en ce que** le dispositif de désagrégation (400, 1400) peut être amené dans une position de stationnement, dans laquelle la position de stationnement est disposée à l'extérieur du canal de compostage (300) et/ou à l'extérieur du tronçon de compostage.

2. Installation de compostage modulaire (1, 1000) selon au moins l'une quelconque des revendications précédentes,
**caractérisée en ce que**, dans un état de transport du conteneur de compostage (100, 1100), le dispositif de désagrégation (400) et le dispositif d'aération (500) sont totalement disposés à l'intérieur du conteur de compostage (100, 1100).

3. Installation de compostage modulaire (1, 1000) selon au moins l'une quelconque des revendications précédentes,
comprenant un dispositif de décharge (1700) disposé sur l'extrémité de décharge, qui est réalisé de préférence en tant que vis transporteuse (720) et/ou est disposé sous une ouverture de décharge (710) dans le fond (110) du conteneur de compostage (100, 1100).

4. Installation de compostage modulaire (1, 1000) selon au moins l'une quelconque des revendications précédentes,
- **caractérisée en ce que** le dispositif de désagrégation (400, 1400) comprend un cylindre (410, 1410) disposé de manière à pouvoir tourner autour d'un axe de rotation (X) et pourvu de dents (411, 1411), dans laquelle l'axe de rotation (X) est orienté de manière sensiblement horizontale et de manière sensiblement orthogonale par rapport au tronçon de compostage,
et/ou
- **caractérisée en ce que** le dispositif de désagrégation (400, 1400) est monté de manière à pouvoir pivoter autour d'un axe de pivotement (Y) orienté de manière sensiblement horizontale,
et/ou
- **caractérisée en ce que** le dispositif de désagrégation (400, 1400) est guidé de manière mobile contre et/ou sur des parois latérales (120, 220a, b) se faisant face, s'étendant de manière parallèle par rapport au tronçon de compostage.

5. Installation de compostage modulaire (1, 1000) selon au moins l'une quelconque des revendications précédentes,
- **caractérisée en ce que** le dispositif de désagrégation (400, 1400) peut être amené d'une position de fonctionnement (400a) dans une position d'arrêt (400b), dans laquelle de préférence le cylindre du dispositif de désagrégation (400, 1400) est disposé dans la position de fonctionnement (400a) de telle sorte qu'il se trouve dans le matériau à composter, de préférence dans une zone inférieure proche du sol du matériau à composter, et dans laquelle de préférence le cylindre du dispositif de désagrégation (400, 1400) est disposé dans la position d'arrêt (400b) de telle sorte qu'il se trouve au-dessus du matériau à composter,
et/ou
- **caractérisée en ce que** le dispositif de désagrégation (400, 1400) peut être amené de la position d'arrêt (400b) dans la position de stationnement, et de préférence également depuis la position de stationnement dans la position d'arrêt (400b) à nouveau, de préférence par pivotement autour de l'axe de pivotement (Y),
dans laquelle la position de stationnement correspond autrement toutefois de préférence à la position de fonctionnement (400a).

6. Installation de compostage modulaire (1, 1000) selon au moins l'une quelconque des revendications précédentes,
**caractérisée en ce que** le dispositif d'aération (500) comprend au moins un tube (510) avec des ouvertures d'aération (511), dans laquelle les ouvertures d'aération (511) et/ou le tube (510) sont pourvus d'un recouvrement laissant passer l'air,
et/ou
**caractérisée en ce que** le dispositif d'aération (500) comprend un compresseur, qui est réalisé pour fournir un flux volumique, de préférence dans l'au moins un tube (510).

7. Installation de compostage modulaire (1, 1000) selon au moins l'une quelconque des revendications précédentes,
comprenant un ou plusieurs capteurs (630) destinés à déterminer un ou plusieurs paramètres de compostage, en particulier la température et/ou l'humidité et/ou la valeur pH et/ou la teneur en oxygène, et/ou une ou plusieurs lances de mesure (1800) destinées à déterminer un ou plusieurs paramètres de compostage, en particulier la température et/ou l'humidité et/ou la valeur pH et/ou la teneur en oxygène, dans laquelle de préférence le dispositif de commande (610) est réalisé pour commander la lance de mesure (1800) de telle sorte que la lance de mesure (1800) reste introduite dans le matériau à composter et est sortie de manière guidée seulement alors du matériau à composter, en particulier à l'aide d'un ensemble avec des roues à friction lorsque le dispositif de désagrégation (400, 1400) renverse le matériau à composter.

8. Installation de compostage modulaire (1, 1000) selon au moins l'une quelconque des revendications précédentes,
- comprenant un dispositif d'irrigation (750) et/ou un recouvrement de toit (760, 1760) et/ou une unité de purification d'air (740) ou une cheminée d'évacuation d'air, dans laquelle de préférence le recouvrement de toit (760, 1760) renferme, de préférence de manière étanche aux fluides ou de manière sensiblement étanche aux fluides, en particulier de manière étanche à l'air ou de manière sensiblement étanche à l'air, un espace au-dessus des parois latérales (120, 220a, b) du conteneur de compostage (100, 1100) et/ou dans laquelle l'unité de purification d'air est réalisée en particulier pour réduire une teneur en ammoniaque de l'air, et dans laquelle de préférence la cheminée d'évacuation d'air se raccorde à un recouvrement de toit (760, 1760) en grande partie étanche à l'air.

9. Installation de compostage modulaire (1, 1000) selon au moins l'une quelconque des revendications précédentes,
**caractérisée en ce que** le dispositif de commande (610) est réalisé pour commander, en fonction d'un ou de plusieurs paramètres de compostage, le dispositif de désagrégation (400, 1400) et/ou le dispositif d'aération (500) et/ou le dispositif de décharge (720) et/ou le dispositif d'irrigation (750) et/ou l'unité de purification d'air (740).

10. Installation de compostage modulaire (1, 1000) selon au moins l'une quelconque des revendications précédentes,
**caractérisée en ce qu'**est disposée sur l'extrémité d'entrée du tronçon de compostage une porte, qui est réalisée dans l'état ouvert pour laisser entrer le dispositif de désagrégation (400, 1400), de préférence dans sa position d'arrêt (400b), dans le canal de compostage (300) et/ou pour le laisser sortir du canal de compostage (300), dans laquelle la porte est disposée de préférence sur un recouvrement de toit (760, 1760), en particulier sur son côté frontal sur l'extrémité d'entrée.

11. Installation de compostage modulaire (1, 1000) selon au moins l'une quelconque des revendications précédentes,
**caractérisée en ce que** le conteneur de compostage (100, 1100) et le conteneur fonctionnel sont disposés sur les deux extrémités côté frontal de l'installation de compostage modulaire (1, 1000) et forment ou comprennent l'extrémité d'entrée et l'extrémité de décharge du tronçon de compostage,
et/ou
**caractérisée en ce que** le conteneur fonctionnel comprend d'autres éléments fonctionnels, de préférence un dispositif de décharge (1700) et/ou une ouverture de décharge (710) et/ou une plateforme d'inspection et/ou un dispositif d'entrée, par exemple un dispositif de transport, comme une vis transporteuse, une bande transporteuse ou une goulotte à matériaux.

12. Installation de compostage modulaire selon au moins l'une quelconque des revendications précédentes, comprenant deux, trois ou plusieurs conteneurs de canal de compostage transportables (200a, b).

13. Installation de compostage modulaire (1, 1000) selon au moins l'une quelconque des revendications précédentes, dans laquelle l'au moins un conteneur de compostage (100, 1100) et l'au moins un conteneur de canal de compostage (200a, b) et/ou l'au moins un conteneur fonctionnel est relié ou sont reliés par leurs côtés frontaux, dans laquelle de préférence les parois latérales (120, 220a, b) de parois frontales se jouxtant les unes les autres sont espacées ou ouvertes.

14. Procédé de compostage,
comprenant :
- la fourniture d'une installation de compostage modulaire (1, 1000) selon au moins l'une quelconque des revendications précédentes,
- l'entrée de matériau à composter dans l'extrémité d'entrée,
- pendant une durée de compostage, la désagrégation et le déplacement du matériau composté depuis l'extrémité d'entrée à l'extrémité de décharge par le dispositif de désagrégation (400, 1400),
- l'amenée du dispositif de désagrégation (400, 1400) dans une position de stationnement, dans lequel la position de stationnement est disposée à l'extérieur du canal de compostage (300) et/ou à l'extérieur du tronçon de compostage,
- la décharge du matériau composté hors de l'extrémité de décharge.
